(19)

**Europäisches Patentamt**
**European Patent Office**
**Office européen des brevets**

(11)  **EP 4 131 075 A1**

(12)  **EUROPEAN PATENT APPLICATION**

(43) Date of publication:
08.02.2023  Bulletin 2023/06

(21) Application number: 21190216.8

(22) Date of filing: 06.08.2021

(51) International Patent Classification (IPC):
*G06N 3/04* (2000.01)        *G06F 17/13* (1995.01)
*G06N 3/08* (2000.01)        *G06N 10/60* (2022.01)

(52) Cooperative Patent Classification (CPC):
**G06N 10/60; G06F 17/13; G06N 3/045;**
**G06N 3/047; G06N 3/084**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Qu&CO R&D B.V.**
**1071 LE Amsterdam (NL)**

(72) Inventors:
• **Elfving, Vincent**
 **1071 LE Amsterdam (NL)**
• **Kyriienko, Oleksandr**
 **1071 LE Amsterdam (NL)**
• **Paine, Annie**
 **1071 LE Amsterdam (NL)**

(74) Representative: **De Vries & Metman**
**Overschiestraat 180**
**1062 XK Amsterdam (NL)**

(54)  **METHODS AND SYSTEMS FOR SOLVING A STOCHASTIC DIFFERENTIAL EQUATION USING A HYBRID COMPUTER SYSTEM**

(57)    A method for solving a stochastic differential equation, SDE, is described using a hybrid data processing system comprising a classical computer and a special purpose processor, wherein the method comprises receiving by the classical computer a partial differential equation, PDE, the PDE describing dynamics of a quantile function QF associated a stochastic differential equation SDE, preferably the partial differential equation defining a quantilized Fokker-Planck QFP equation, the SDE defining a stochastic process as a function of time and one or more further variables and the QF defining a modelled distribution of the stochastic process; executing by the classical computer a first training process for training one or more neural networks to model an initial quantile function, the one or more neural networks being trained by the special purpose processor based on training data, the training data including measurements of the stochastic process; executing by the classical computer a second training process wherein the one or more neural networks that are trained by the first training process are further trained by the special purpose processor based on the QFP equation for one or more time intervals to model the time evolution of the initial quantile function; and, executing by the classical computer a sampling process based on the quantile functions for the one or more time intervals, the sampling process including generating samples of the stochastic process using the quantile function, the generated samples representing solutions of the SDE.

```
┌─────────────────────────────────────────────┐
│ Input Stochastic Differential Equation(s)     │
│ paired with initial/boundary conditions       │
│ (which can be either analytical or data-based)│
│ 402                                            │
└─────────────────────────────────────────────┘
                    ↓
┌─────────────────────────────────────────────┐
│ Set up DQC or PINN structures for             │
│ representing quantile function(s)             │
│ G(z,t) and its derivatives                    │
│ 404                                            │
└─────────────────────────────────────────────┘
                    ↓
┌─────────────────────────────────────────────┐
│ Train Quantile Function at time t0 using      │
│ initial conditions, paired with the           │
│ differential constraints (solving quantile    │
│ ODE), using DQC or PINN                        │
│ 406                                            │
└─────────────────────────────────────────────┘
                    ↓
┌─────────────────────────────────────────────┐
│ Train time-dependent Quantile Function using  │
│ Quantile Mechanics; the DQC or PINN has an    │
│ additional input feature (time) to train      │
│ against                                        │
│ 408                                            │
└─────────────────────────────────────────────┘
                    ↓
┌─────────────────────────────────────────────┐
│ Generate samples from the optimized quantile  │
│ function, at different time points, to         │
│ generate time-series                           │
│ 410                                            │
└─────────────────────────────────────────────┘
```

**Fig. 4A**

EP 4 131 075 A1

**Description**

Field of the invention

The disclosure relates to solving a stochastic differential equation, in particular, though not exclusively, to methods and systems for solving a stochastic differential equation using a hybrid computer system

Background of the invention

Stochastic differential equations (SDEs) describe a broad range of challenging engineering problems. For example, SDEs are used when modelling physical and molecular systems that include Brownian motion and quantum noise. As an example, in industrial chemistry and pharmaceutical applications, SDEs are used for modelling ab-initio quantum chemistry/dynamics, thermal effects, molecular dynamics, fluid dynamics, among many others. In biological systems, SDEs are used to study population dynamics and epidemiology. Additionally, SDEs are widely used in financial calculus, a fundamental component of all mechanisms of pricing financial derivatives and description of market dynamics supporting applications for predicting stock prices, currency exchange rates etc.

SDEs, in particular non-linear SDEs, are inherently hard to solve due to the combination of a stochastic component with the already hard challenge of solving a partial differential equation (PDE), and potentially a non-linear term present. Typically, classical computational methods rely on discretization of the space of variables, often with a fine grid being required to represent a solution accurately. Moreover, as derivatives are approximated using numerical differentiation techniques (finite differencing and Runge-Kutta methods), small grid steps are required to reproduce the results qualitatively. This leads to large computational cost as the number of points M (degrees of freedom) grows.

Moreover, lattice-based calculations for increasing dimensionality of the problem (equal to the number of variables $v$) leads to a 'blow-up' of required number of points as $\sim M^v$, a phenomenon known in the field as 'the curse of dimensionality'. Global (spectral) numerical methods for solving differential equation rely on representing the solution in terms of a suitable basis set. This recasts the problem to finding optimal coefficients for the polynomial (e.g. Fourier or Chebyshev) approximation of the sought function. While in some cases spectral methods may more efficiently find optimal solutions, for finding general functions the same problem of dimensionality applies, as the required basis set size can grow rapidly for complex solutions and differentiation still requires performing numerical approximations.

Finally, unlike linear systems of algebraic equations, nonlinear differential equations can be stiff with solutions being unstable for certain methods. Such systems are difficult to solve due to large change of solution in the narrow interval of parameters. Furthermore, challenging problems correspond to systems with highly oscillatory solutions and discontinuities. Yet again it requires considering fine grids and large basis sets, together with applying meticulous numerical differentiation techniques.

The stochastic component of SDEs introduces further difficulties over PDEs; some numerical methods are great at solving the deterministic part (PDE-like) but have difficulties in the stochastic component, while other methods are treating properly the stochastic component but face difficulties propagating changes in the process throughout time, possibly for long-time integration purposes and interpolation. Additionally, it is well-known in the state of the art that complex distributions are NP-hard to sample from, which prevents extracting a large number of samples efficiently from found solutions to SDEs in standard PDF form.

For the particular case of quantum algorithmic solutions to solving SDEs, previous methods have relied on computationally-expensive amplitude encoding schemes, complex or deep quantum circuits, or other incompatibilities with realistic NISQ hardware devices available today and in the expected near future.

Hence, from the above, it follows that there is therefore a need in the art for improved methods and systems for solving an SDE. In particular, there is a need in the art for improved methods and systems for solving an SDE and to generate sets of samples that from solutions to the SDE.

Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a nonexhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the embodiments in this disclosure to reduce or eliminate at least part of the drawbacks known in the prior art. In particular.

In an aspect, the invention may relate to a method for solving a stochastic differential equation, SDE, using a hybrid data processing system comprising a classical computer and a special purpose processor.

In an embodiment, the method may include receiving by the classical computer a partial differential equation, PDE, the PDE describing dynamics of a quantile function QF associated a stochastic differential equation SDE, preferably the partial differential equation defining a quantilized Fokker-Planck QFP equation, the SDE defining a stochastic process as a function of time and one or more further variables and the QF defining a modelled distribution of the stochastic process; executing by the classical computer a first training process for training one or more neural networks to model an initial quantile function, the one or more neural networks being trained by the special purpose processor based on training data, the training data including measurements of the stochastic process; executing by the classical computer a second training process wherein the one or more neural networks that are trained by the first training process are further trained by the special purpose processor based on the QFP equation for one or more time intervals to model the time evolution of the initial quantile function; and, executing by the classical computer a sampling process based on the quantile functions for the one or more time intervals, the sampling process including generating samples of the stochastic process using the quantile function, the generated samples representing solutions of the SDE.

Thus, the invention to generate sets of samples that form solutions to a time-evolution of a stochastic differential equation, SDE. The samples may be generated based on quantile functions (QFs) and derivatives thereof that is associated with the SDE. To that end, the SDE may be rewritten as a set of differential equations for the quantile function. Further, a neural network representation of the QF and its derivatives may be determined, which can be used to generate samples that form solutions of the SDE. The neural network representation may be a classical neural network or a quantum neural network. Feature maps and differentiable quantum circuits (DQCs) may be used to directly represent the quantile function of the probability distribution for underlying SDE, and propagate them in time by solving the differential equations of quantile mechanics.

In an embodiment, the special purpose processor may be a quantum processor configured to execute operations associated with one or more quantum neural networks QNNs. QNN allow a high-dimensional feature space, are suitable even for systems of high-correlations, may be used to create functions from many basis functions, are resistant to overfitting due to unitarity. QNN has potentially lower energy consumption than big NN depending on HW implementation, scales even better with dimensionality than PINN due to efficient parallel/serialization of feature maps, corresponding to very deep NN case. QNNs allow a quantum quantile mechanics (QQM) approach may be wherein quantum neural networks are used to model the quantile function associated with a SDE.

In an embodiment, the second training process may include:

receiving or determining, by the classical computer system, a formulation of quantum circuits representing the PDE describing the dynamics of a quantile function,
preferably the quantum circuits being parameterized by at least one latent variable z associated with the SDE through its quantile functional description, and the quantum circuits including one or more function circuits for determining one or more trial functions values $f(z_j)$ around one more points $z_j$ and one or more differential function circuits for determining one or more trial derivative values, preferably one or more first order trail derivative and one or more second order trail derivatives, around the one or more points $z_j$. executing, by the quantum processor, the quantum circuits for a set of points $z_j$ in the variable space z of the PDE; receiving, by the classical computer system, in response to the execution of the quantum circuits quantum, hardware measurement data; and, determining, by the classical computer system, based on the quantum hardware measurement data and a loss function, if the quantum hardware measurement data forms a solution to the PDE.

In an embodiment, the second training process may inclde solving the PDE based on differentiable quantum circuits DQCs, the differentiable quantum circuits including a first feature map quantum circuit which is a function of a differentiable variable x of the PDE, a second feature map quantum circuit which is a function of a differentiable variable *t* of the PDE encoding the time evolution of the quantum circuit and a quantum circuit representing a variational ansatz.

In an embodiment, the determining if the quantum hardware measurement data forms a solution to the one or more DEs may be further based on one or more boundary conditions associated with the one or more DEs

In an embodiment, executing the quantum circuits may include: translating each of the quantum circuits into a sequence of signals and using the sequence of signals to operate qubits of the quantum computer; and/or, wherein receiving hardware measurement data includes: applying a read-out signal to qubits of the quantum computer and in response to the read-out signal measuring quantum hardware measurement data.

In an embodiment, the one or more quantum neural networks for modelling the quantile function may include gate-based qubit devices, optical qubit devices and/or gaussian boson sampling devices.

In an embodiment, during the first training process the one or more neural networks may be trained using a quantum generative adversarial network, qGAN, process, including a quantum generator neural network and a quantum discriminator neural network.

In an embodiment, random numbers may be generated by a classical computer which are fed into the one or more quantum neural networks that model the quantile functions for different time instances, for generate multiple sets of a samples wherein each set of samples has a distribution representing a solution to the SDE.

In an embodiment, random numbers may be generated by the quantum computer, preferably the random numbers being generated by the quantum neural network, the quantum GAN or QCBM setting.

In an embodiment, the special purpose processor is a GPU, TPU or FPGA-based hardware processor configured to execute operations associated with one or more neural networks NNs.

In an embodiment, during the first training process the one or more neural networks are trained using a generative adversarial network, GAN, process, including a generator neural network and a discriminator neural network.

In an embodiment, the second training process may include solving the PDE based on one or more trained neural networks, preferably physics informed neural networks PINNs, the one or more trained neural networks being trained to model the quantile function and the derivative constraints on the quantile function as defined by the PDE for different time instances.

Thus, the invention allows determination a neural network-based NN-based sample generator representing the quantile function associated with the SDE. The NN-based sample generated may be implemented as a classical neural network, in particular a physics information neural network PINN or a quantum neural network QNN. PINNs are robust against curse of dimensionality, scales much better than FEM for solving PDEs in many cases. Moreover, PINNs provide more flexibility than Finite Element Methods, because the loss function description can include many more flexible details including data.

In an embodiment, random numbers may be generated by a classical computer which are fed into the trained one or more neural networks that model quantile functions for different time instances, to generate multiple sets of a samples wherein each set of samples has a distribution representing a solution to the SDE.

In an embodiment, the SDE may define a reverse-time SDE, or backward SDE, or forward SDE, or reverse-time backward SDE.

In an embodiment, the second order derivatives of the PDE may be computed using the parameter-shift rule, as described by equation 15 in this application.

In a further aspect, the invention may relate to a system for solving one or more stochastic differential equations, SDEs, using a hybrid data processing system comprising a classical computer system and a special purpose processor, wherein the system is configured to perform the steps of: receiving by the classical computer a partial differential equation, PDE, the PDE describing dynamics of a quantile function QF associated a stochastic differential equation SDE, preferably the partial differential equation defining a quantilized Fokker-Planck QFP equation, the SDE defining a stochastic process as a function of time and one or more further variables and the QF defining a modelled distribution of the stochastic process; executing by the classical computer a first training process for training one or more neural networks to model an initial quantile function, the one or more neural networks being trained by the special purpose processor based on training data, the training data including measurements of the stochastic process; executing by the classical computer a second training process wherein the one or more neural networks that are trained by the first training process are further trained by the special purpose processor based on the QFP equation for one or more time intervals to model the time evolution of the initial quantile function; and, executing by the classical computer a sampling process based on the quantile functions for the one or more time intervals, the sampling process including generating samples of the stochastic process using the quantile function, the generated samples representing solutions of the SDE.

In a further aspect, the invention may relate to a system for solving one or more stochastic differential equations, SDEs, using a hybrid data processing system comprising a classical computer system and a special purpose processor, wherein the system is configured to perform any of the steps as described above.

The systems and methods described in this application illustrate how to train a neural network as a QF based on data and/or a known model at an initial point of time, and find a time-propagated QF which can be used for high-quality sampling to obtain data sets that are solutions to the underlying SDE. When using quantum neural networks in the DQC form, the advantages of quantum-based learning may be exploited. Differential equations for quantile functions may be used for training differentiable quantum circuits. A quantum quantile learning protocol is described for inferring QF from data and use quantile quantum mechanics QQM to propagate the system in time. This provides a robust protocol for time series generation and sampling.

In an embodiment, the differential equation(s) include one or more (non-)linear stochastic differential equations, including but not limited to those of Ito and Stratonovich form.

An implementation of the method described on the basis of the embodiments in this application, implemented on noisy quantum hardware with finite logical gate error and finite coherence times

An implementation of the method on noisy quantum hardware wherein the subroutines of the algorithm may be executed by multiple quantum devices operating in parallel and/or in series, routing measurement data to one classical computer which computes the loss function value each iteration.

An implementation of the method described on the basis of the embodiments in this application, wherein instead of measuring a cost function for each part in the loss function as described, the embodiment relies on overlap estimations of lef-hand-side and right-hand-side of the differential equations in functional form, considering the quantum hardware quantum information overlap as functional overlap.

An implementation of the method described on the basis of the embodiments in this application, based on qubit-based quantum hardware, where the quantum information carriers are embodied by qubits or quantum bits.

An implementation of the method described on the basis of the embodiments in this application, where the quantum hardware consists of a continuous-variable system, such that information carriers are defined by continuous quantum variables

The invention may also relate to a computer program or suite of computer programs comprising at least one software code portion or a computer program product storing at least one software code portion, the software code portion, when run on a computer system, which may include a classical computer and a special purpose process, e.g. a quantum computer or a GPU, TPU or FPGA based special purpose processor for exacting neural networks that are used for representing quantile function associated with an SDE and to compute the time evolution of quantile functions based on an partial differential eqation describing the dynamics of the quantile functioin.

The invention may further relate to a non-transitory computer-readable storage medium storing at least one software code portion, the software code portion, when executed or processed by a computer, is configured to perform any of the method steps as described above.

The invention will be further illustrated with reference to the attached drawings, which schematically will show embodiments according to the invention. It will be understood that the invention is not in any way restricted to these specific embodiments.

Brief description of the drawings

**Fig.** 1 depicts a high-level schematic representing different approaches for solving stochastic differential equations;
**Fig.** 2 illustrates the relation the probability density function and the quantile function associated with a set of stochastic differential equations;
**Fig.** 3 depicts a transformation of a SDE into a quantilized Fokker-Planck equation;
**Fig. 4A** and **4B** depict methods for producing time series of samples that form a solution to a SDE according to an embodiment of the invention;
**Fig.** 5 depicts examples of uniform sample approximators for modelling a function
**Fig. 6** schematically depicts a flow diagram of a method for solving general (non-)linear differential equations using universal function approximators (UFAs) according to an embodiment of the invention;
**Fig. 7** depicts a scheme for solving partial differential equations based on differentiable quantum circuits DQCs
**Fig. 8** depicts an example of a hybrid computer that is especially adapted genererating time series of samples that form a solution to a SDE;
**Fig 9** shows quantum circuit diagrams for a DQC-based quantum algorithmic subroutine representing a Quantile Function
**Fig. 10** shows a schematic of a variational feedback loop for a DQC-based quantum algorithmic subroutine
**Fig 11A-11C** are hardware-level schematics of quantum processor for executing qubit operations;
**Fig. 12** depicts simulation results from applying the presented method to solving the Ohrnstein-Uhlenbeck process using QCL as subroutine;
**Fig. 13** depicts simultion results from applying the presented method to solving the Ohrnstein-Uhlenbeck process and comparing to a classical SDE solving method, Euler-Maruyma
**Fig. 14** depicts learning the quantile function describing the stochastic distribution underlying the Ohrnstein-Uhlenbeck process.;
**Fig. 15** depicts a typical Generative Adversial Network (GAN) setup for learning to represent a distribution from input data
**Fig. 16** depicts a perspective of a GAN-trained generator, seen as a quantile function representation unit, showing the quantile function is reordered
**Fig. 17** depicts the discontinuities present in the derivatives of the inverted functions required for doing quantile mechanics with a GAN
**Fig. 18** compares different reordering functions and their characteristics;

Detailed description

SDEs, in particular non-linear SDEs, are inherently hard to solve due to the combination of a stochastic component with the already hard challenge of solving a partial differential equation (PDE), and potentially a non-linear term present. Typically, classical computational methods rely on discretization of the space of variables, often with a fine grid being required to represent a solution accurately. Moreover, as derivatives are approximated using numerical differentiation techniques (finite differencing and Runge-Kutta methods), small grid steps are required to reproduce the results qualitatively. This leads to large computational cost as the number of points M (degrees of freedom) grows.

Moreover, lattice-based calculations for increasing dimensionality of the problem (equal to the number of variables $v$) leads to a 'blow-up' of required number of points as $\sim M^v$, a phenomenon known in the field as 'the curse of dimensionality'. Global (spectral) numerical methods for solving differential equation rely on representing the solution in terms of a suitable basis set. This recasts the problem to finding optimal coefficients for the polynomial (e.g. Fourier or Chebyshev) approximation of the sought function. While in some cases spectral methods may more efficiently find optimal solutions, for finding general functions the same problem of dimensionality applies, as the required basis set size can grow rapidly for complex solutions and differentiation still requires performing numerical approximations.

Finally, unlike linear systems of algebraic equations, nonlinear differential equations can be stiff with solutions being unstable for certain methods. Such systems are difficult to solve due to large change of solution in the narrow interval of parameters. Furthermore, challenging problems correspond to systems with highly oscillatory solutions and discontinuities. Yet again it requires considering fine grids and large basis sets, together with applying meticulous numerical differentiation techniques.

The stochastic component of SDEs introduces further difficulties over PDEs; some numerical methods are great at solving the deterministic part (PDE-like) but have difficulties in the stochastic component, while other methods are treating properly the stochastic component but face difficulties propagating changes in the process throughout time, possibly for long-time integration purposes and interpolation. Additionally, it is well-known in the state of the art that complex distributions are NP-hard to sample from, which prevents extracting a large number of samples efficiently from found solutions to SDEs in standard PDF form.

For the particular case of quantum algorithmic solutions to solving SDEs, previous methods have relied on computationally-expensive amplitude encoding schemes, complex or deep quantum circuits, or other incompatibilities with realistic NISQ hardware devices available today and in the expected near future.

The present method aims to overcome one or more of these technical problems, in particular: treating both the sampling and time evolution on equal footing and importance, tackling the cures of dimensionality with a better-scalable neural network approach, sampling directly using the quantile function, and providing analytical derivatives rather than finite differencing approximations for more accurate solving and long-time solutions.

In particular, the embodiments in this application aim to generate sets of samples that form solutions to a time-evolution of a stochastic differential equation, SDE. The samples may be generated based on quantile functions (QFs) and derivatives thereof that is associated with the SDE. To that end, the SDE may be rewritten as a set of differential equations for the quantile function. Further, a neural network representation of the QF and its derivatives may be determined, which can be used to generate samples that form solutions of the SDE. The neural network representation may be a classical neural network or a quantum neural network. Feature maps and differentiable quantum circuits (DQCs) may be used to directly represent the quantile function of the probability distribution for underlying SDE, and propagate them in time by solving the differential equations of quantile mechanics.

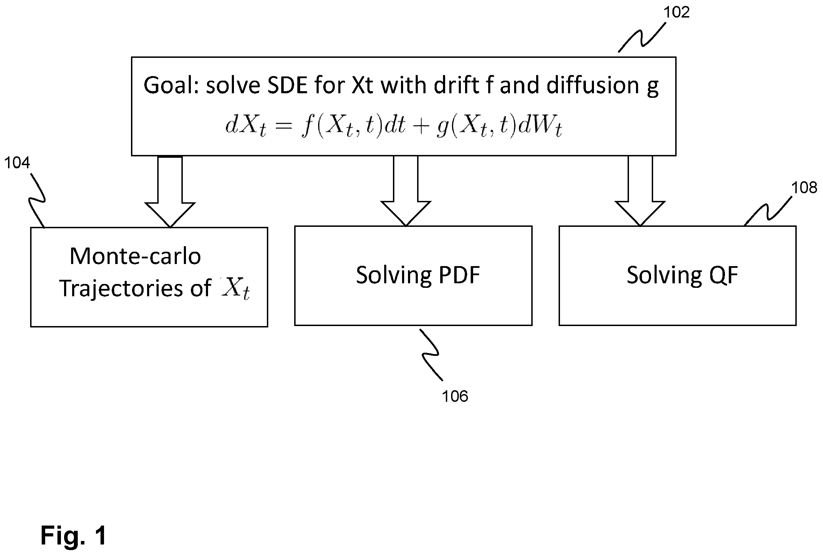

**Fig. 1** depicts a high-level schematic representing different approaches for considering solutions to SDEs, which are associated with a set of initial and/or boundary conditions. As shown in **Fig. 1**, a general system of SDEs **102** may be written as follows (equation 1):

$$dX_t = f(X_t, t)dt + g(X_t, t)dW_t,$$

where $X_t$ is a vector of stochastic variables which may be parameterized by time $t$ (or another parameter). Deterministic functions $f$ and $g$ correspond to the drift and diffusion processes $W_t$ which corresponds to the so-called stochastic Wiener process, i.e. a real-valued continuous-time stochastic process. The stochastic component makes SDEs distinct from other types of partial differential equations, adding a non-differentiable contribution. This makes SDEs particularly hard to solve, especially when dealing with a large number of variables.

Typically, one may consider three approaches for "solving" an SDE. A first approach relates to a Monte Carlo approach **104** for finding multiple trajectories that are sampled from the SDE for the stochastic variable $X_t$ given Wiener process draws $dW_t$. This represents a strategy solving the SDE as a collection of tracers that correspond to possible trajectories that the variable $X_t$ could go. Given sufficient trajectories, the overall expected behavior of the underlying stochastic process may be determined this way. However, while Monte-Carlo methods scale independently of the number of dimensions when one wishes to compute a particular point of the PDF (and inverse square root of the number of samples), this no longer holds when one wishes to solve the whole distribution underlying $X_t$ based on the behavior of many points, as they still scale exponentially with the number of dimensions.

In a further approach one could determine the time evolution of the so-called probability density function (PDF) **106,** which describes the probability distribution of the stochastic process as it evolves through time. Access to the PDF, allows computation of the probabilities of certain outcomes by integrating that PDF over some variable(s). The PDF can be computed by transforming the SDE **102** into a so-called Fokker-Planck equation, which is possible for an arbitrary SDE or set of SDEs. The Fokker-Planck equation represents a fully deterministic partial differential equation describing dynamics of the PDF. This PDE may then be solved by regular methods for solving PDEs. While solving PDEs is very challenging in the general case already, the main disadvantage of such an approach - i.e. directly finding a solution of the FP equation, the PDF - does not offer strategies to generate samples directly. A sampling process including drawing x from a complicated multidimensional distribution $p(x, t)$, at different time instances $t$, represents another computationally expensive problem to solve.

The third approach to solve a set of SDEs relates to generative modelling, which includes the use of neural net type of algorithms that need to be trained and that are capable of determining a correlation between input data and output data which aims to generate samples that closely correspond the actual underlying stochastic process described by the SDE. Generally speaking, a generative algorithm models how data i.e. observed data points of a signal or a process, was generated in order to categorize a signal. It asks the question: based on my generation assumptions, which parametrized model is most likely to generate an output signal that behaves as or looks similar to the original input signal? In contrast, a discriminative algorithm does not care about *how* the data was generated, it simply categorizes a given signal. As an example, generative modelling may be used to create artificial/synthetic datasets which can enhance machine learning trainability and performance. Typically, after a generative model has been trained (modelled, converged), its use is to generate samples. Effective sampling from the model is vital to its usefulness.

Samples may be generated based on different generative modelling schemes. One of these schemes is referred to as the *inversion method,* wherein the PDF associated with an SDE is integrated to obtain a so-called cumulative density function (CDF), which then may be inverted to obtain the quantile function. The quantile function (QF) basically represents a generator for generating samples that meet the PDF of the SDE. Thus, given a uniformly distributed input stochastic variable between 0 and 1, the QF returns a sample that corresponds to the probability distribution described by the PDF. Hence, solving the QF for different points in time, allows efficient generation of samples that meet the PDF of the underlying SDE.

The Fokker-Planck equation may be rewritten in the so-called quantilized form. This equation is also known as the Quantilized Fokker-Planck (QFP) equation, which is a specific partial differential equation PDE, known from the field of Quantile Mechanics (Shaw https://doi.org/10.1017/S0956792508007341}). The QFP equation deterministically describes the dynamics of an QF that is associated with the drift and diffusion terms of a set of SDEs as described above with reference to equation 1. Solving the QFP PDE may be used to determine the time-evolution of the QF and use QFs associated with different time instances to generate time-series of samples. Thus far, this PDE was solved using conventional methods such as power-series methods for determining the QF based on the QFP PDE. These conventional methods cannot be used for solving a set of SDEs having multiple variables. In particular, conventional computer systems cannot be used to efficiently solve a set of SDEs comprising multiple variables due to the curse of dimensionality as explained above.

The embodiments described in this application relate to computer-implemented methods and computer systems that are especially adapted to faithfully generate time series of samples that represent solutions to a set of SDEs. The time series of samples may be determined based on quantile functions that are solutions to a QFP equation. In an embodiment, the QFP may be solved based on differentiable quantum circuits DQCs. In another approach, physics-inspired neural networks PINNs may be used to solve the QFP.

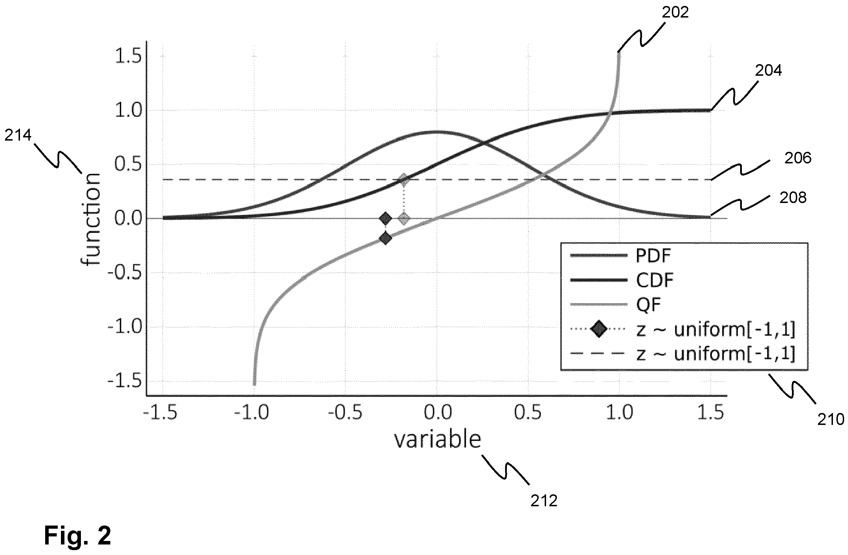

**Fig. 2** illustrates the relation the probability density function, the quantile function associated with a set of stochastic differential equations and obtaining samples on the basis of a quantile function. A sample from a PDF can be obtained using a basic inversion sampling scheme. This process is illustrated in **Fig. 2,** which shows a normal probability density function PDF, which is Gaussian with $(\mu, \sigma) = (0, 1/2)$ for a stochastic variable $X$ **212**. In this example, the domain may be chosen as $X = [-1.5, 1.5]$. A so-called cumulative distribution function CDF **204** for the stochastic variable $X$ may be defined as an integral $F_X(x) = \int_{-\infty}^{x} p(x') dx'$. The cumulative distribution function $F_X(x)$ maps x to the probability value lying in [0,1] range on the ordinate axis **214**. The cumulative distribution function may be associated with a quantile function QF **202** (sometimes also referred to as the inverse CDF). The red diamonds correspond to a randomly drawn latent variable z, and associated probability for the sample value, connected by dotted lines. Being a non-decreasing function, the cumulative distribution function $F_X(x)$ has to be inverted in order to determine a sample. Generating a random number $z \in (-1,1)$ from the uniform distribution, equation $z = F_X(x)$ can be solved and the corresponding sample can be found. This requires finding the inverse of the cumulative distribution function, $F_x^{-1}(x)$ or $Q(x)$. Inverting the CDF may pose computational challenges, requiring graphical solution methods.

Once the quantile function $F_x^{-1}(x)$ of a PDF is obtained, samples can be easily generated, wherein a random number $z_r \sim$ uniform (-1, 1) gives a random sample $X$ from PDF of interest as $X = F_x^{-1}(z)$ (note that the range of $z$ can be easily $X$ rescaled).

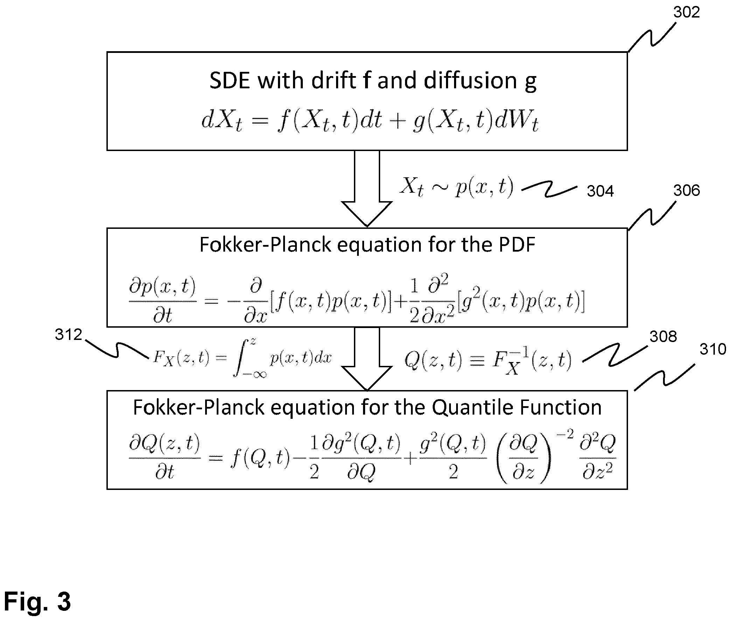

**Fig. 3** depicts a transformation of a SDE into a quantilized Fokker-Planck equation. While generally quantile functions are difficult to derive from PDFs, they can be obtained by solving nonlinear partial differential equations derived from SDEs of interest. This approach is referred to as quantile mechanics and is schematically depicted in **Fig. 3**. As shown in this figure, a SDE **302** comprising a drift term $f(x,t)$ and diffusion term $g(x, t)$ for a variable $X$ that is associated with a probability density function $p(x, t)$ may be transformed into a Fokker-Planck equation **306** for the probability density function $p(x, t)$. Then, based on cumulative distribution function $F_X(x)$ **312** and the quantile function **308** being the inverse cumulative distribution function, the Fokker-Planck equation for the QF, i.e. the quantilized Fokker-Plank equation **310** may be obtained. Thus, a quantile function $Q(x,t)$ may be determined for any general SDE in the form of equation (1) and its evolution in time is provided by the quantilized FP (equation 2);

$$\frac{\partial Q(z,t)}{\partial t} = f(Q,t) - \frac{1}{2}\frac{\partial g^2(Q,t)}{\partial Q} + \frac{g^2(Q,t)}{2}\left(\frac{\partial Q}{\partial z}\right)^{-2}\frac{\partial^2 Q}{\partial z^2},$$

$$(2)$$

wherein $f(Q,t)$ and $g(Q,t)$ are the drift and diffusion terms as described above with reference to equation (1). Hence, the quantilized FP equation describes the time evolution of a quantile function associated with a SDE having a drift and a diffusion term. The equation includes partial derivatives with respect to the quantile function and latent variable. The quantilized FP equation may be solved as a function of latent variable $z$ and time $t$. Once a solution $Q(z,t)$ is determined based on an initial set of parameters, including an initial time instance, the time-evaluation of the quantile function $Q(z, t)$ may be evaluated for random uniform points on the $z$ axis. To that end, different QFs for different time instances are determined. This way, time series (trajectories) of samples may be obtained based on determined quantile functions $Q(x,t)$ wherein the time series obey the stochastic differential equation (1).

In general, quantile mechanics equations are difficult to solve. Power series solution as function approximation are known. However, the difficulty arises when multidimensional problems are considered, for example when more than one variable $X_t$ is considered simultaneously, and using power series for generative modelling suffers from the curse of dimensionality. High-dimensionality is a problem for almost every classical method, where fundamentally the method's scaling depends exponentially on the dimensionality. For every dimension, some subroutine needs to be executed, but also for each outcome of every other dimension's subroutine. This yields a multiplicative effect to the algorithmic scaling.

In contrast, to harness the full power of quantile mechanics, the methods and system in this application use a neural network representation of QFs to solve SDEs. The embodiments in this application apply machine learning methods to quantile mechanics and quantile-based sampling, wherein either a classical and quantum neural network may be used for approximating a QF. Here, quantum neural networks enable reproducing complex functions in the high-dimensional space, including systems where strong correlations are important. Thus, in some embodiments of the invention, quantum computing and quantile mechanics are combined to develop an quantum quantile mechanics approach wherein solutions to the quantilized FP equation, i.e. quantile functions, are used to generate time-series of samples wherein each time-serie represents a solution to the SDEs.

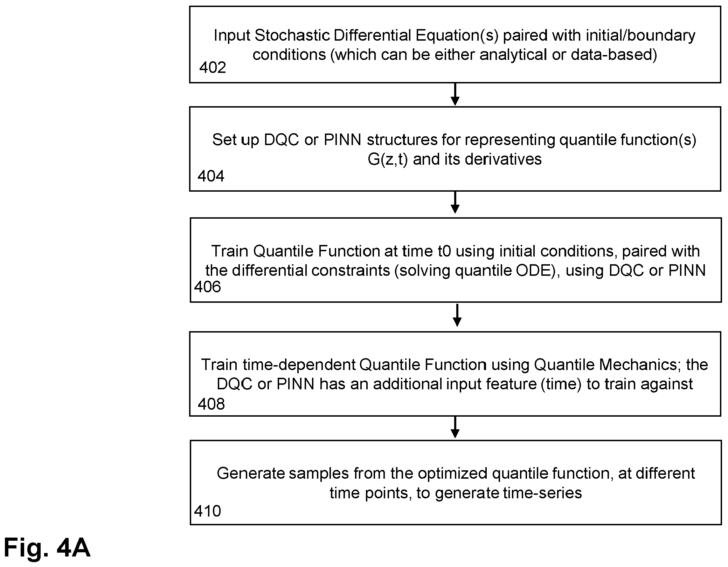

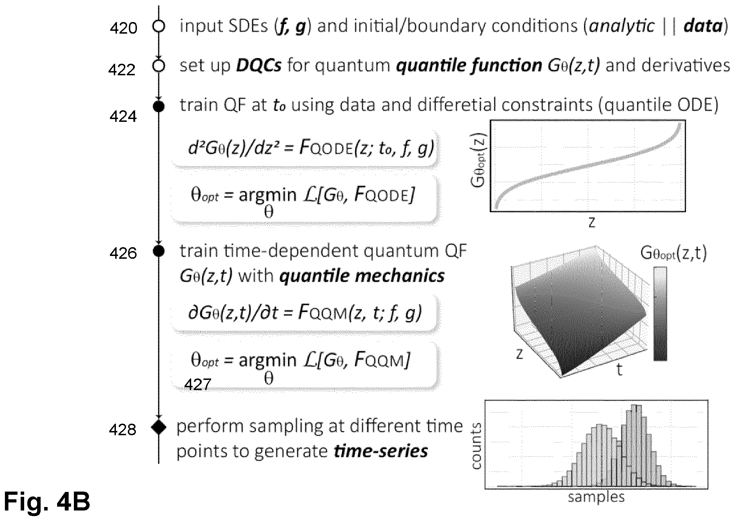

**Fig. 4A** and 4B depict a method of producing time series of samples that form a solution to an SDE according to an embodiment of the invention. In particular, the figure depicts a flowchart of generating time series that form a solution to an SDE based on a quantum quantile mechanics QQM method that may be executed by a hybrid computer including a classicl computer and a special purpose processor, e.g. a quantum computer of a GPU, TPU or FPGA-based neural network processor.

The process may start with a computer receiving or selecting information regarding a stochastic differential equation SDE and regarding initial and/or boundary conditions for such SDE (step **402)**. The SDE may represent a model of for example of a physical or a molecular system. Here, for simplicity, below the term SDE may also include a set of SDEs. The initial and/or boundary conditions may be either analytical or data-based. The information about the SDE may include a partial differential equation PDE, e.g. a quantilized Fokker-Planck equation, describing the time-evolution (dynamics) of a quantile function $G(z, t)$ in terms of a drift term $f$ and diffusion term $g$ of the SDE and partial derivatives with respect to the quantile function and latent variable $z$ (as described above with reference to equation 2).

Thereafter, one or more universal function approximators UFAs may be determined to model the quantile function and the derivatives, wherein the one or more universal function approximators may include one or more trainable algorithms, preferably one or more trainable neural networks, for representing the quantile function and the derivatives (step **404).**

In an embodiment, a quantum neural network QNN represented by one or more differential quantum circuits may be determined for representing the quantile function and the derivatives. Such quantum algorithm may be executed on a quantum computer comprising a system of qubits. The one or more differential quantum circuits may define quantum gate operations (unitary evolutions) on the qubits, so that the qubits can be operated as a quantum neural network.

In another embodiment, one or more physics informed neural networks, PINNs, may be trained for representing the quantile function and the derivatives. The PINN may be executed on a special purpose processor, e.g. a graphical processing unit (GPU), tensor processing unit (TPU), an FPGA-based processing units or classical-photonic processor unit.

At a predetermined time instance $t_0$, the one or more neural networks for modelling the quantile function associated with the SDEs may be trained based on training data (measurements and/or observations of the stochastic process of interest, or generated synthetically by other means) using the initial conditions and the differential constraints (as defined for example static part of the quantilized FP equation) (step **406).** Hence, at this step the time-evolution of the quantile function is not considered. This will result in an initial quantile function $G_0(z, t_0)$, which may be used as a start for determining the time-evolution of the quantile function using the time-dependent quantilized FP equation.

Then, the one or more neural networks that were trained to model the initial quantile function may be further trained to model the time-evolution of the quantile function (step **408).** The further training of the initial quantile function for determining the time evolution of the quantile function may be based a partial differential equation PDE, such as the quantilized FP equation, that models the dynamics of the quantile function associated with the SDE. To that end, differentiable quantum circuits DQCs or physics informed neural networks PINNs representing the quantile function and derivatives thereof may be used to solve the PDEs.

The training of the neural networks described above include the use of a loss function and iteratively training the neural networks based on a trial function (representing the quantile function) in a feedback loop until the difference between the input data and output data is sufficiently small (smaller than a threshold value). This way an optimized quantile function may be determined.

The optimized quantile functions for different time instances may be determined and used to generate time-series of samples that form solutions to the SDE (step **410).** Thus, multiple quantile functions at different time instances may be determined and each quantile function may be used to draw a predetermined number of samples.

Thus, from the above it follows that the SDE may be transformed to a quantilized Fokker-Planck equation, i.e. a predetermined partial differential equation, describing dynamics of at least one quantile function QF underlying the modelled distribution of the stochastic process associated with the SDE solution. Then, a neural network-based scheme such as a quantum neural network based on a DQC scheme or a conventional neural network based on a physics informed PINN scheme may be used to fit data to form a function that closely matches the quantile function.

The training of the one or more neural networks to represent the at least one quantile function, may include: a first training step wherein the one or more neural networks are trained based on training data and the quantilized Fokker-Planck equation, wherein the training data represent realizations of the stochastic process, either obtained as observations or measurements of the process, or synthetically generated. Thereafter, a second training step may be wherein the one or more trained neural networks are further trained based on the quantilized Fokker-Planck equation over one or more predetermined intervals to evaluate the time-evolution of the quantile function. Finally, sampling may be performed based on the one or more trained networks, at different time instances to generate one or more time-series of the stochastic process, the one or more time-series representing a solution of the SDE.

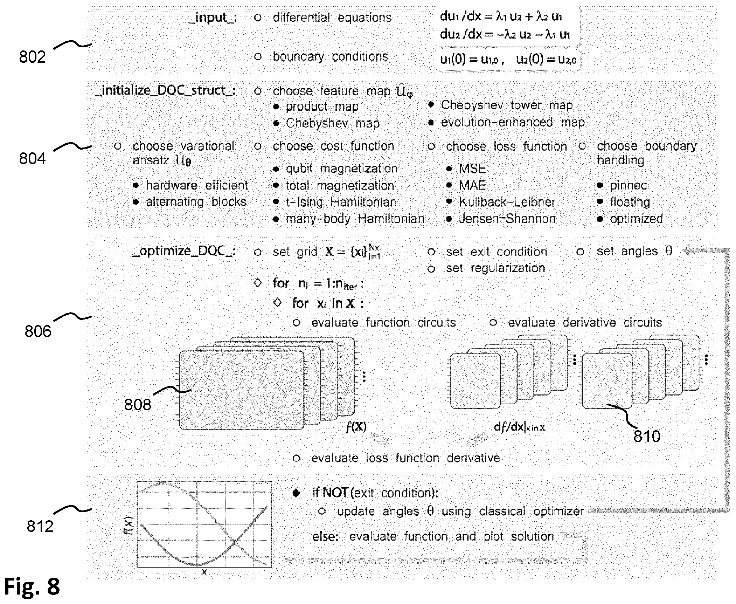

**Fig. 4B** illustrates a method as described with reference to Fig. 4A wherein a quantum neural network is trained for solving a stochastic differential equation (SDE). First, the SDE and information on initial boundary conditions (analytical boundary conditions or measurement points of the stochastic process) may be received (step **420)** which may be transformed into a partial differential equation PDE, e.g. a quantile Fokker Planck equation, describing the dynamics of a quantile function associated with the SDE. Then a set of differentiable quantum circuits DQCs may be constructed (step **422)** representing a quantile function $G_\theta(z, t)$ and differential constraints as defined by the PDE as a function of at least one random latent variable z. A (static) initial quantile function may be determined (step **424)** by training a quantum neural network based on the training data, i.e. the measurement points of the stochastic process. The initial quantile function may be used to further train the quantum neural network for determining the time evolution of the quantile function (step **426).** The time-evolution of the quantile function may be determined based on the PDE that describes the dynamics of the quantile function, e.g. the quantile FP equation. A hybrid quantum-classical loop may used for optimizing variational parameters $\theta$ **427** through loss function $\mathcal{L}$ minimization based on data and differential equations for the initial and propagated QF. This hybrid quantum-classical loop is described hereunder in more detail with reference to **Fig. 8-10.** Evaluating $G_{\theta opt}$ ($z \sim$ uniform(-1, 1), $t$) at optimal angles, random values of the latent variable, and different time points $t$, allows determining of multiple quantile function for different time instances (step 428) which may be used to generate sets of samples defining time series samples that form solutions to the SDE. Detailed examples of this approach will be discussed hereunder in more detail.

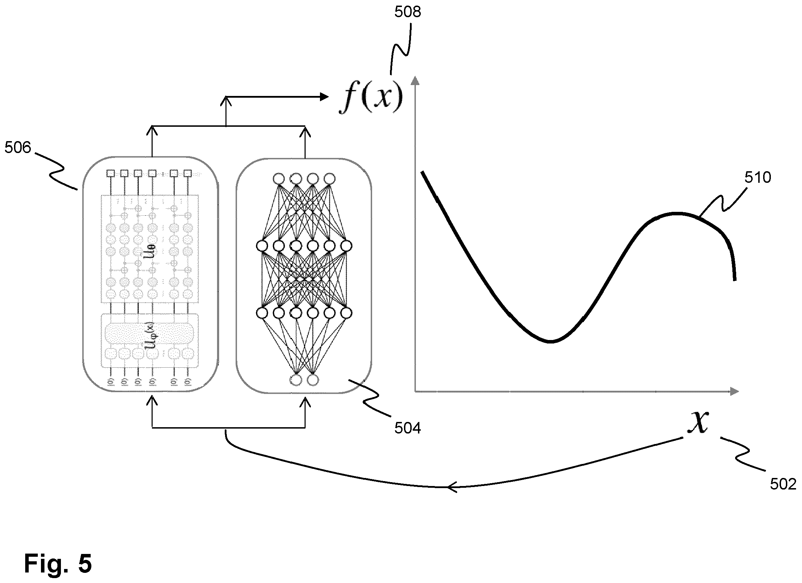

**Fig. 5** depicts examples of uniform function approximators UFAs for modelling a function in particular a quantile function and derivates thereof that are used to solve an SDE according to the methods described in this application. In particular, the figure depicts two examples of UFAs. In an embodiment, a quantum neural network **506** may be used as an UFA. Such quantum neural network may include a system of qubits that is controlled by a classical computer. The classical computer and the quantum computer may form an example of a hybrid computer that is especially adapted to execute methods for determining the time evolution of a quantile function that is associated with a SDE and generating time series of samples that from a solution to the SDE as descried with reference to **Fig. 4.** A quantum neural network may be trained and executed by a hybrid computer including a conventional computer that includes a quantum processor as special purpose processor for executing quantum operations associated with the quantum neural network. This way quantum circuit learning (QCL) may be used to train one or more quantum neural networks to represent (model) an initial quantile function which subsequently may be used to determine its time evolution based on a partial differential equation, such as the quantilized Fokker Planck equation.

In another embodiment, a classical neural network **504** may be used as an UFA. In that case, the neural networks may be implemented on a GPU, TPU or FPGA based special purpose processor which is controlled by a classical computer. The classical computer and the special purpose processor may form another example of a hybrid computer that is especially adapted to execute methods for determining the time evolution of a quantile function that is associated with a SDE and generating time series of samples that from a solution to a SDE as described with reference to **Fig. 4.**

An input/dependent variable x **502** may be inserted in an UFA, and the resultant output value $f$ **508** may be retrieved. By repeatedly checking the value of $f$ for each x, one may represent or plot the functional dependence **510** of $f$ on x. Sufficiently intricate UFA designs **504/506** may represent arbitrary functions **508**. This way, UFAs may be used to fit data (a regular regression task), or it can be used to represent solutions to (partial/stochastic) differential equations.

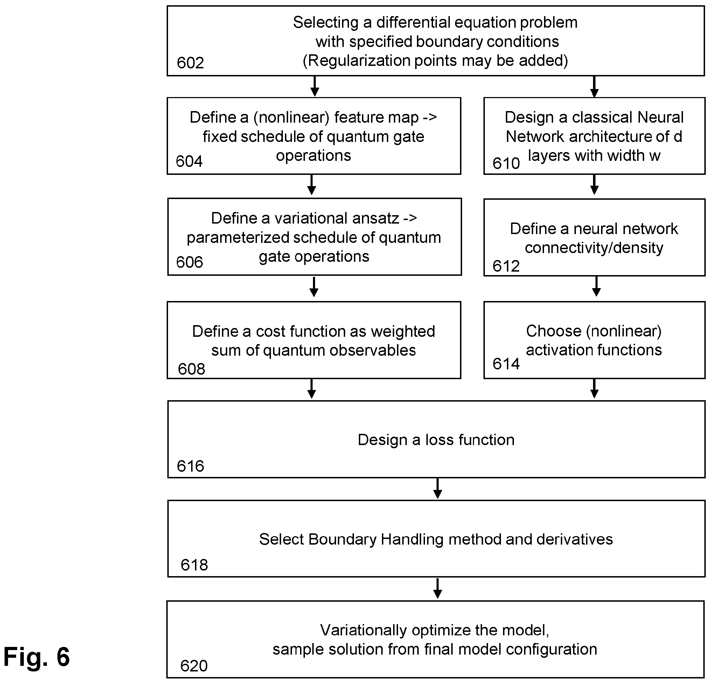

**Fig. 6** schematically depicts a flow diagram of a method for solving general (non-)linear differential equations using universal function approximators according to an embodiment of the invention. The process may start by specifying an input for the solver, **602.** This may include the problem in hand, e.g. a physical or chemical system that specified as a set of (non-)linear differential equations of various types, together with their respective boundary conditions. Additionally, a set of regularization points may be added to ensure the optimized solution is chosen in the desired qualitative form.

Further, a selection may be made between a quantum neural network approach **(604/606/608)** based on quantum computations, or a classical Neural Network approach **(610/612/614)**. In both cases, the network architecture may be designed with the problem specificities in mind. When using a quantum Neural Network approach, a schedule for derivative quantum circuit DQC optimization may be set up and a quantum circuit composition may be determined. Specifically, the type of quantum feature map **604** and an ansatz of a variational quantum circuit **606,** including its depth, may be determined. Additionally, a cost function type may be chosen if variational weights are considered **608**. Details for such quantum scheme are provided hereunder in more detail. When using a classical neural network approach, the neural network architecture may be determined **610,** including a.o. the width and number of layers. Then the connectivity and density of connections may be determined **612,** which determines which node in the network will activate which other node. Furthermore, one would choose a nonlinear activation function for one or more of the network nodes **614.**

In both neural network cases, the type and design of the loss function **616** is may be determined; then, a strategy to match the boundary terms and derivatives is set up **618.** One also needs to specify the classical optimizer for variational angles (quantum neural network) or weights with associated hyperparameters (classical neural network), including a number of iterations and exit conditions **620.**

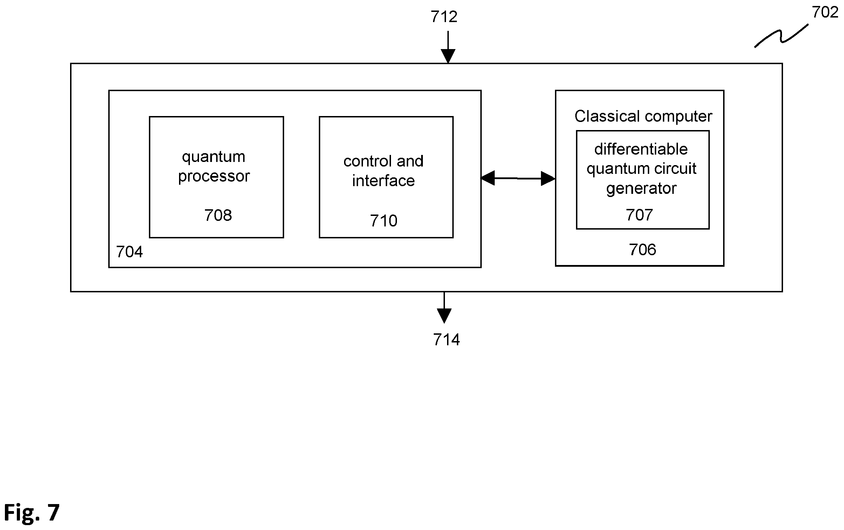

**Fig. 7** and **8** depict a data processing system and an optimization scheme for solving nonlinear differential equations according to an embodiment of the invention. **Fig. 7** depicts an example of a hybrid computer that is especially adapted generating time series of samples that form a solution to a SDE. The figure illustrates a network **702** which may include a first data processing system connected to a second data processing system **706.** The first data processor system may be implemented as a quantum computer system **704** comprising a quantum processor system **708,** e.g. a qubit quantum processor e.g. a gate-based quantum computer or an optical quantum computer, and a controller system **710** comprising input output (I/O) devices which form an interface between the quantum processor and a second data processor, e.g. a classical computer **706** comprising one or more classical processors. The controller system may include means for generating and/or controlling qubits. For example, in an embodiment, the controller system may include a microwave system for generating microwave pulses, which are used to manipulate the qubits. Alternatively, the controller system may include single photon sources for providing optical qubits to a wave-guide based optical quantum computer. Further, the controller may include output devices, e.g. electrical and/or optical readout circuits, for readout of the qubits. In some embodiments, at least a part such readout circuit may be located or integrated with the chip that includes the qubits.

The system may further comprise a (purely classical information) input **112** and an (purely classical information) output **714.** The data processor systems may be configured to generate time series of samples that form a solution to a SDE using the quantum computer. Input data may include information related to the differential problem to be solved. This information may include the differential equations, boundary conditions, information for construction quantum circuits that can be executed on the quantum computer and information about an optimization process that needs to be executed to compute the solutions to the nonlinear differential equations. The input data may be used by the system to construct quantum circuits, in particular differentiable quantum circuit. Quantum circuits may be constructed that represent quantum neural networks that are especially adapted for modelling quantile functions and derivatives thereof. Further, the system may be configured to classically calculate values, e.g. sequences of pulses, e.g. microwave pulses and/or optical pulses such as single photon pulses, which may be used to initialize and control qubit operations as described by the quantum circuits. To that end, in an embodiment, the classical computer may include a differentiable quantum circuit (DQC) generator **707,** which may be configured to construct a quantum circuit description for a predetermined partial differential equation, for example a quantilized FP equation, associated with a set of SDEs and to transform the quantum circuit description into control signals for operating the one or more qantum processors.

Output data that is readout from the quantum computer may include ground state and/or excited state energies of the quantum system, correlator operator expectation values, optimization convergence results, optimized quantum circuit parameters and hyperparameters, and other classical data.

Each of the one or more quantum processors may comprise a set of controllable two-level systems referred to as qubits. The two levels are $|0\rangle$ and $|1\rangle$ and the wave function of a $N$-qubit quantum processor may be regarded as a superposition of $2^N$ of these basis states. In further embodiment, multi-level systems including more than two energy levels may be used. Examples of such quantum processors include noisy intermediate-scale quantum (NISQ) computing devices (in which qubit operations need to be executed within a certain coherence time of the qubits) and fault tolerant quantum computing (FTQC) devices.

The quantum processor may be configured to execute a quantum algorithm in accordance with the qubits operations of a quantum circuit description as described with reference to the embodiments in this application. The quantum processor may be implemented as a gate-based qubit quantum device, which allows initialization of the qubits into an initial state, interactions between the qubits by sequentially applying quantum gates operations between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state. Alternatively, the quantum processor may be configured to execute a quantum algorithm in accordance with the qubits operations defined by a quantum circuit description using optical qubit quantum device.

The embodiments in this application aim to generate time series of samples that form a solution to an SDE. The time evolution of a quantile function underlying the SDE may be determined by evaluating the quantilzed FP equation, wherein neural networks may be used for modelling quantile functions and derivatives thereof. For different time instances a quantile function can be determined that meets the quantilzed FP equation. Each of these quantile functions may then be used to determine samples. Thus, embodiments in this application enable solving SDEs of a general form using a quantum computer or neural networks in a way that is substantially different from the schemes known in the prior art.

For a given set of nonlinear differential equations, quantum circuits are constructed on the basis of so-called differentiable quantum circuits (DQCs). These quantum circuits may be executed on the quantum computer and a cost function, e.g. an Hermitian operator such as a Hamiltonian, may be used to measured observables that form an approximation of the solution to the set of nonlinear differential equations are used in a classical optimization algorithm. A loss function may be used to determine if the approximation of the solution is sufficiently close to the solution to the set of nonlinear differential equations.

**Fig. 8** depicts a scheme for solving partial differential equations based on differentiable quantum circuits DQCs. **Fig. 8** shows the workflow of the DQC subroutine for solving general PDEs; first an input equation and boundary conditions are given **802.** Then, several choices are made for the DQC structure, such as variational ansatz design, feature map choice, cost function etc. **804.** Then, the quantum circuits **808** and derivative quantum circuits **810** are evaluated for all the considered points in the domain of interest **806.** The resulting data is combined into a loss function (gradient), which is used to update the theta parameters of the variational ansatz and classically optimized in a feedback loop until convergence is met; then, the solution can be extracted by circuit-function evaluation for all points of interest in the now-trained domain **812.**

Differentiable quantum circuits DQC

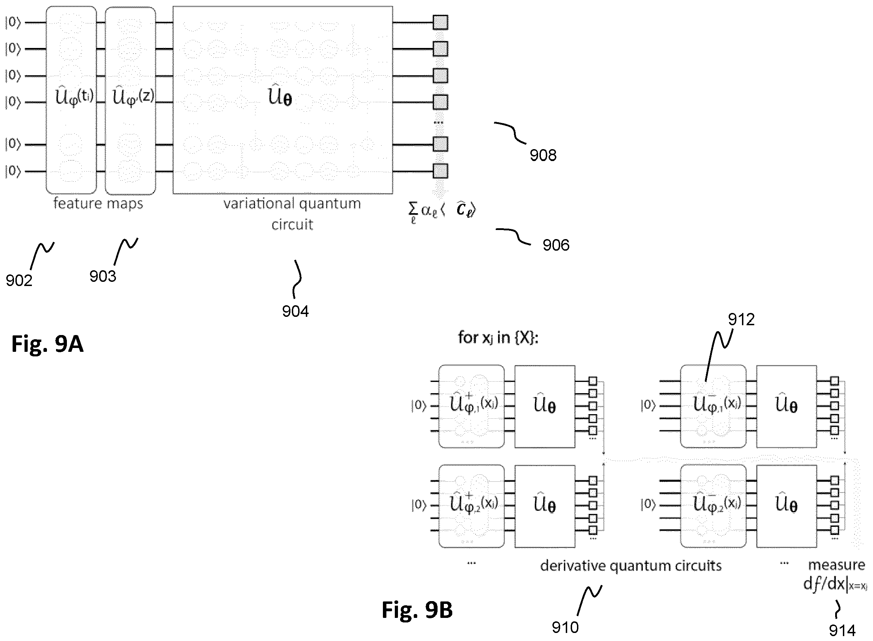

**Fig 9** shows quantum circuit diagrams for a DQC-based quantum algorithmic subroutine representing a quantile function. In particular, the figure illustrates quantum circuit diagrams at the core of the quantum algorithmic subroutine DQC that may be used to represent the Quantile Function. The circuit in **Fig. 9A** comprises a feature map circuit **902** which actuates a unitary evolution $\hat{U}_\varphi(t)$ over the qubits, which is a function of differential equation parameter $t$, and hereby encodes the time-dependence of the circuit. It also includes of a feature map circuit **903** $\hat{U}_\varphi(z)$ which is a function of differential equation latent variable z, and hereby encodes the latent-variable dependence of the circuit. It also comprises of a variational ansatz $\hat{U}_\theta$ **904,** and an observable-based readout **908** for the set of operators $\hat{C}_\ell$ comprising the cost function Hamiltonian. Combining measurements **906,** the trial function $f(x_j) = \sum_\ell \alpha_\ell \langle \hat{C}_\ell (x_j) \rangle$ may be computed as a potential solution to the differential equation.

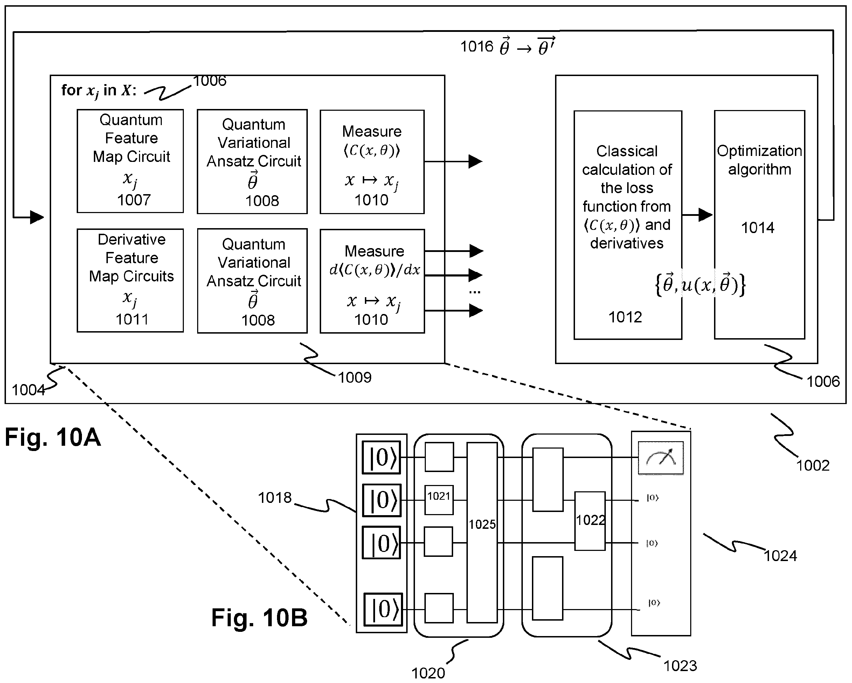

**Fig. 9B** depicts a similar structure but instead is used to compute the derivative of the function $f$ with respect to any feature map variable summarized as $x$ **914,** using derivative quantum circuits **910,** and evaluated at $x = x_j$. One difference with the circuits depicted in **Fig 9A** is the parametric shift of variables in unitary $\hat{U}_\varphi(x_j)$ **912.** The measurement results from function and derivate measurements are classically post-processed, and combined for all points $t$ and z in the domain of interest. Variational coefficients $\theta$ and cost structure coefficients $\alpha$ may be optimized in a quantum-classical hybrid loop in order to reduce the loss function value for $\theta$ and $\alpha$ settings as described with reference to **Fig.** 10.

Thus, as can be seen from **Fig. 9,** trial functions may be prepared as quantum circuits parametrized by variables $x \in \mathbb{R}$ (or a collection of variables) of the differential equations as shown in **Fig.** 9. As the discussion is generalized straightforwardly to the case of $v$ variables, $x \in \mathbb{R}^v$ , for brevity the simplified single variable notation x is used. Using quantum feature map encoding $\hat{U}_\varphi(x)$, a pre-defined nonlinear function of variables $\varphi(x)$ is cast to amplitudes of the quantum state $\hat{U}_\varphi(x)|\varnothing\rangle$ prepared from some initial state $|\varnothing\rangle$. Using quantum feature map encoding $\hat{U}_\varphi(x)$, a pre-defined nonlinear function of variables $\varphi(x)$ is cast to amplitudes of the quantum state $\hat{U}_\varphi(x)|\varnothing\rangle$ prepared from some initial state $|\varnothing\rangle$.

A quantum feature map represents a latent space encoding, that unlike amplitude encoding, does not require access to each amplitude and is controlled by classical gate parameters. The quantum feature maps real parameter x to the corresponding variable value. Next, a variational quantum circuit $\hat{U}_\theta$ parametrized by vector $\theta$ that can be adjusted in a quantum-classical optimization loop is used. The resulting state $|f_{\varphi,\theta}(x)\rangle = \hat{U}_\theta \hat{U}_\varphi(x)|\varnothing\rangle$ for optimal angles contains the x-dependent amplitudes sculptured to represent the sought function. Finally, the real valued function can be read out as an expectation value of predefined Hermitian cost operator C, such that the function reads:

$$f(x) = \langle f_{\varphi,\theta}(x) | \hat{C} | f_{\varphi,\theta}(x) \rangle$$

The differentiation of quantum feature map circuits may be defined by the following expression: $d\hat{U}_\varphi(x)/dx = \sum_j \hat{U}_{d\varphi,j}(x)$, which allows the action differential to be represented as a sum of modified circuits $\hat{U}_{d\varphi,j}$. This way, function derivatives may be represented using a product derivative rule. Thus, in case of a quantum feature map generated by strings of Pauli matrices or any involutory matrix, the parameter shift rule may be used such that a function derivative may be expressed as a sum of expectations

$$df(x)/dx = \frac{1}{2} \sum_j \left( \langle f^+_{d\varphi,j,\theta}(x) | \hat{C} | f^+_{d\varphi,j,\theta}(x) \rangle \right.$$
$$\left. - \langle f^-_{d\varphi,j,\theta}(x) | \hat{C} | f^-_{d\varphi,j,\theta}(x) \rangle \right),$$

with $\left| u f^\pm_{d\varphi,j,\theta}(x) \right\rangle$ defined through the parameter shifting, and index $j$ runs through individual quantum operations used in the feature map encoding. Applying the parameter shift rule once again a second-order derivative $d^2u(x)/dx^2$ may be obtained with four shifted terms for each generator.

Importantly, to perform quantum circuit differentiation, the automatic differentiation (AD) technique may be used. AD allows to represent exact analytical formula for the function derivative using a set of simple computational rules, as opposed to the numerical differentiation. Since automatic differentiation provides an analytical derivative of the circuit in at any point of variable x, the scheme does not rely on the accumulated error from approximating the derivatives. Notably, all known prior art schemes for quantum ODE solvers involve numerical differentiation using Euler's method and finite difference scheme that suffers from approximation error, and often require fine discretization grid. The embodiments in this application alleviate this problem.

One of the aims of the invention is to define the conditions for the quantum circuit to represent the solution of differential equations, generally written as $F[\{d^n u/dx^n\}_n, \{f_m(x)\}_m] = 0$, where the functional $F[\cdot]$ is provided by the problem. This demands that derivatives and nonlinear functions need to give net zero contribution. Hence, solving the differential equations may be written as an optimization problem using a loss function $\mathcal{L}_\theta[d_x f, f, x]$. This corresponds to minimization of $F[x]|_{x\to xi}$ at the set of points $\{x_i\}$, additionally ensuring that the boundary conditions are satisfied. Once the optimal angles

$$\theta_{\text{opt}} = \underset{\theta}{\text{argmin}}(\mathcal{L}_\theta[d_x f, f, x])$$

are found, the solution from Eq. (1) as a function can be produced. Hence, the embodiments in this application:

1. use quantum feature map encoding to overcome the complexity of amplitude encoding that is used in the prior art for preparing the solution at the boundary;
2. use automatic differentiation of the quantum feature map circuit, allowing to represent analytical function derivatives without imprecision error characteristic to numerical differentiation (finite differencing);
3. use variational quantum circuits to search for a suitable solution in the exponential space of fitting polynomials, thus resembling the spectral and finite element methods with exponentially improved scaling; and,
4. avoid the data readout problem, as the solution is encoded in the observable operator, such that expectation can be routinely calculated.

For the latter point, it differs from amplitude encoding $|u\rangle$ in HHL and related methods, where getting the full solution from amplitudes is exponentially costly and requires tomographic measurements.

Based on the DQC scheme above, circuits may be constructed which can work for quantum processors with limited computational power, meaning with the gate depth (number of operations to performed in series) being limited to a certain limited amount. The gate depth largely defines the training procedure, which is relied upon in the classical optimization loop. Alleviating the reduced depth problem, it is also possible to exploit parallel training strategies for the quantum circuit and quantum state encoding, coming closer to the ideal quantum operation regime.

Below quantum circuits are described that may be used to build differentiable circuit as a solution of differential equations, in particular stochastic differential equations SDEs. The quantum circuits include quantum feature maps and their derivatives; variational quantum circuits (ansatze); cost functions that define trial functions; and loss functions that are used in the optimization loop. Additionally, boundary handling techniques, regularization schemes, and a complete optimization schedule are described.

A quantum feature map is a unitary circuit $\hat{U}_\varphi(x)$ that is parametrized by the variable x and typically nonlinear function $\varphi(x)$. Acting on the state, it realizes a map $x \mapsto \hat{U}_\varphi(x)|\varnothing\rangle$ s.t. the x-dependence is translated into quantum state amplitudes. This is also referred as a latent space mapping. Different ways of feature map encoding exist. Below various examples are described including a Chebyshev quantum feature map that allows to approximate highly nonlinear functions. The procedure of feature map differentiation, as an important step in constructing quantum circuits for solutions of differential equations is also described. A product feature map may be used that uses qubit rotations.

Variational feedback loop for a DQC-based quantum algorithms

**Fig. 10A** and **10B** show schematics of a variational feedback loop for a DQC-based quantum algorithmic subroutine. In particular, the figures depict a method for solving general (non-)linear partical DE, such as SDEs, using a quantum computer according to an embodiment of the invention. In particular, **Fig 10A.** After determining the quantum circuits and optimization schedule, several initialization steps need to be made **1004.** First a set of points {X} (a regular or a randomly-drawn grid) may be specified for each equation variable x **1006.** The variational parameters $\theta$ are set to initial values (e.g. as random angles). Then, an expectation value $\langle C(x, \theta)\rangle$ over variational quantum state $|C_{\varphi,\theta}(x_j)\rangle$ for the cost function may be estimated **1010,** using the quantum hardware, for the chosen point $x_j$. Then, a potential solution at this point may be constructed taking into account the boundary conditions.

The derivative quantum circuits may be determined **1011** and their expectation value $d\langle C(x,\theta)\rangle/dx$ is estimated **1010** for the specified cost function, at point $x_j$. Repeating the procedure **1006** for all $x_j$ in {X}, function values and derivative values may be collected, and the loss function is composed for the entire grid and system of equations (forming required polynomials and cross-terms by classical post-processing) as shown in **1012.** The regularization points are also added, forcing the solution to take specific values at these points. The goal of the loss function is to assign a "score" to how well the potential solution (parametrized by the variational angles $\theta$) satisfies the differential equation, matching derivative terms and the function polynomial to minimize the loss.

With the aim to increase the score (and decrease the loss function), we also compute the gradient of the loss function **1012** with respect to variational parameters $\theta$. Using the gradient descent procedure (or in principle any other classical optimization procedure **1014),** the variational angles may be updated from iteration $n_j = 1$ into the next one $n_j$

+ 1 in step **1016:** $\theta^{(n_j)} \leftarrow \theta^{(n_j+1)} - \alpha \nabla_\theta \mathcal{L}$ (with $\alpha$ being here a 'learning' rate). The above-described steps may be repeated until the exit condition is reached. The exit condition may be chosen as:

1) the maximal number of iterations $n_{iter}$ reached;
2) loss function value is smaller than pre-specified value; and
3) loss gradient is smaller than a certain value.

Once the classical loop is exit, the solution is chosen as a circuit with angles $\theta_{opt}$ that minimize the loss. Finally, the full solution is extracted by sampling the cost function for optimal angles $\langle u_{\varphi,\theta}(x)|\hat{C}|u_{\varphi,\theta}(x)\rangle$. Notably, this can be done for any point x, as DQC constructs the solution valid also beyond (and between) the points at which loss is evaluated originally.

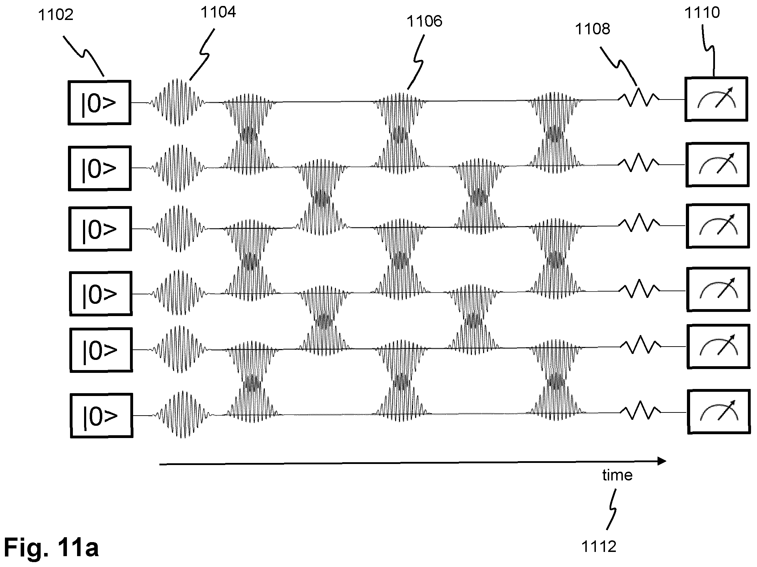

**Fig 11A-11C** are hardware-level schematics of quantum processor for executing qubit operations. **Fig 11A** is a hardware-level schematic of the actions effectuating the logical operations shown in **Fig. 9**. The ansatz and variational unitaries, **902** and **904** respectively, can be decomposed into a sequence of logical gate operations. These logical gate operations are transformations in the quantum Hilbert space over the qubits. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the |0> state **1102.** Then, for example a series of single-qubit pulses is sent to the qubit array in **1104,** which may apply a single-layer feature map. Two-qubit pulse sequences can be used to effectively entangle multiple qubits **1106.** The duration, type, strength and shape of these pulses determine the effectuated quantum logical operations. **1108** indicates a 'break' in the depicted timeline, which means the sequence of gates may be repeated in a similar fashion in the direction of the time axis **1112.** At the end of the pulse sequences, the qubits are measured **1110.**

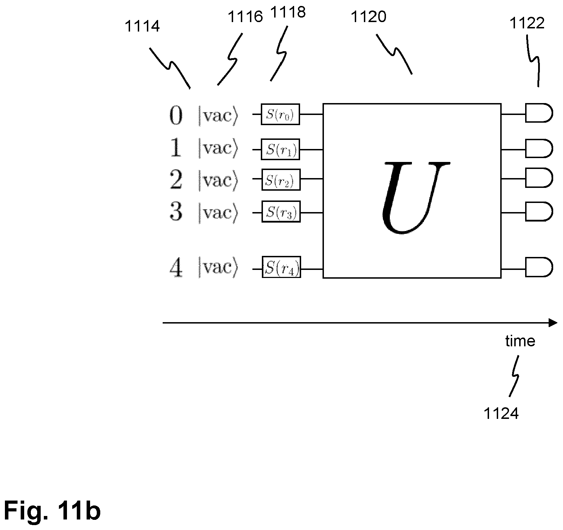

**Fig 11B** is a hardware-level schematic of the actions effectuating the logical operations shown in **Fig. 9**, specified for a photonic/optical quantum processor. The ansatz and variational unitaries, **902** and **904** respectively, can be decomposed into a sequence of optical gate operations. These logical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parameterized way. Initially the modes **1114** are all in the vacuum state **1116,** which are then squeezed to produce single-mode squeezed vacuum states **1118.** The duration, type, strength and shape of controlled-optical gate transformations determine the effectuated quantum logical operations **1120.** At the end of the optical paths, the modes are measured with photon-number resolving, Fock basis measurement **1122,** tomography or threshold detectors.

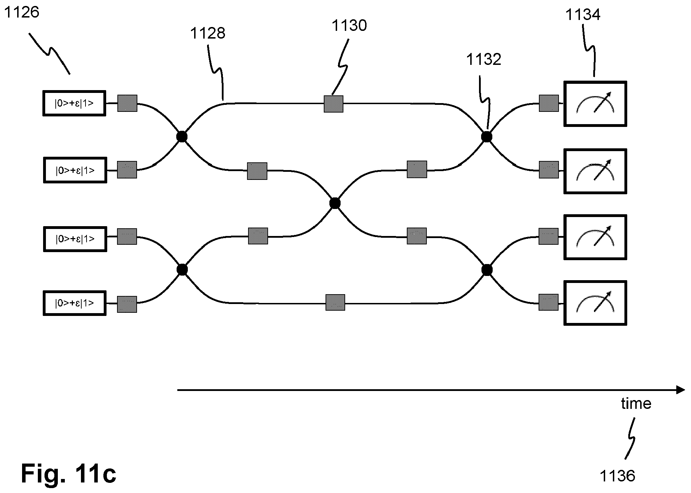

**Fig 11C** is a hardware-level schematic of the actions effectuating the logical operations shown in **Fig. 9**, specified for a Gaussian boson sampling device. The ansatz and variational unitaries, **902** and **904** respectively, can be decomposed into a sequence of optical gate operations. These logical gate operations are transformations in the quantum Hilbert space over the optical modes. In order to transform the internal states of these modes, a classical control stack is used to send information to optical switches and delay lines. The controller may formulate the programmable unitary transformations in a parameterized way.

Initially the modes **1126** are all in a weak coherent state, which mostly vacuum with a chance of 1 or two photons and negligibly so for higher counts. Then, the photons travel through optical waveguides **1128** through delay lines **1130** and two-mode couplers **1132** which can be tuned with a classical control stack, and which determines the effectuated quantum logical operations. At the end of the optical paths, the modes are measured with photon-number resolving **1134,** or threshold detectors.

Quantum quantile mechanics

To represent a trainable (neural) quantile function that can be used to model a quantile function or a derivative thereof a parametrized quantum circuit may be constructed using a classical-data-to-quantum-data embedding based on feature maps $\hat{U}_\phi(x)$ (with $\phi$ labelling a mapping function), followed by variationally-adjustable circuit (ansatz) $\hat{U}_\theta$ by angles $\theta$. The latter is routinely used in variational quantum algorithms, and for ML problems has the hardware efficient ansatz (HEA) structure. The power of quantum feature maps comes from mapping $x \in X$ from the data space to the quantum state $|\Psi(x)\rangle = \hat{U}_\varphi(x)|\varnothing\rangle$ leaving in the Hilbert space. Importantly, the automatic differentiation of quantum feature maps allows representing derivatives as DQCs. The readout is set as a sum of weighted expectation values. Following this strategy, a generator circuit $G(z, t)$ may be determined to represent a function parametrized by $t$ (labels time as before), and the embedded latent variable $z$. The generator reads

$$G(z,t) = \langle\varnothing|\hat{\mathcal{U}}_\phi(t)^\dagger\hat{\mathcal{U}}_{\phi'}(z)^\dagger\hat{\mathcal{U}}_\theta^\dagger\Big(\sum_{\ell=1}^{L}\alpha_\ell\hat{C}_\ell\Big)\hat{\mathcal{U}}_\theta\hat{\mathcal{U}}_{\phi'}(z)\hat{\mathcal{U}}_\phi(t)|\varnothing\rangle,$$

$$(3)$$

where $\hat{U}_\phi(z)$ and $\hat{U}_{\phi'}(t)$ are quantum feature maps (possibly different), $\{\hat{C}_\ell\}_{\ell=1}^{L}$ represent L distinct Hermitian cost function operators, and $\{\hat{C}_\ell\}_{\ell=1}^{L}$ and $\theta$ are real coefficients that may be adjusted variationally. Here, the initial state may be denoted as $|\varnothing\rangle$, which typically may be chosen as a product state $|0\rangle^{\otimes N}$. The circuit structure is shown in **FIG. 9**. We can also work with multiple latent variables and thus multidimensional distributions.

The next step training procedure for G [or specifically for the generator's operator $\hat{U}_G(z) = \hat{U}_\theta\hat{U}_{\phi'}(z)$] may be determined such that it represents QF for an underlying data distribution. It is equired that the circuit maps the latent variable $z \in [-1,1]$ to a sample $G(z) = Q(z)$. By choosing different sets of cost functions, with the same quantum circuits, samples can be produced from multidimensional PDF. The training is based on a dataset $\{X_{data}\}$ generated from a probability distribution for the system that is studied (or measured experimentally), which serves as an initial/boundary condition. Additionally, the underlying processes that describe the system may (as defined by the quantilized FP equantion, may serve as differential constrains. The problem is specified by SDEs $dX_t = f_\xi(X_t, t)dt + g_\xi(X_t, t)dW_t$, where the drift and diffusion functions $f_\xi(X_t, t)$ and $g_\xi(X_t, t)$ are parametrized by the vector $\xi$ (time-independent). The SDE parameters for generating data similar to $\{X_{data}\}$ may be known in the first approximation $\xi(0)$. This can be adjusted during the training to have the best convergence, as used in the equation discovery approach. The loss is constructed as a sum of data-based and SDE-based contributions, $\mathcal{L} = \mathcal{L}_{data} + \mathcal{L}_{SDE}$. The first part $\mathcal{L}_{data}$ is designed such that the data points in $\{X_{data}\}$ are represented by the trained QF. For this, the data is binned appropriately and collected in ascending order, as expected for any quantile function. Then, quantum circuit learning (QCL) may be used as a quantum nonlinear regression method to learn the quantile function. This approach may represent a data-frugal strategy, where the need for training on all data points is alleviated. The second loss term $L_{SDE}$ is designed such that the learnt quantile function obeys probability models associated to SDEs. Specifically, the generator $G(z, t)$ needs to satisfy the quantilized Fokker-Planck equation (2). The differential loss is introduced using the DQC approach, and reads

$$\mathcal{L}_{SDE} = \frac{1}{M}\sum_{z,t\in\mathcal{Z},\mathcal{T}}\mathfrak{D}\left[\frac{\partial G_\theta}{\partial t}, F(z,t,f,g,\frac{\partial G_\theta}{\partial z},\frac{\partial^2 G_\theta}{\partial z^2})\right], \quad (4)$$

where $\mathcal{D}$ [$a$, $b$] denotes the distance measure for two scalars, and the loss is estimated over the grid of points in sets $(\mathcal{Z},\mathcal{T})$. Here

$$M = \mathrm{car}(\mathcal{Z})\mathrm{car}(\mathcal{T})$$

is the total number of points. The function $F(z, t, f, g, \partial_z G_\theta, \partial_{zz}^2 G_\theta)$ may be introduced denoting the RHS for Eq. (2), or any other differential constrain. Other aspects of the QQM method include the calculation of second-order derivatives for the feature map encoded functions (as required is $\mathcal{L}_{SDE}$), and the proposed treatment of initial/boundary conditions for multivariate function.

Calculating second-order derivatives

For solving SDEs access is needed to the derivatives of the circuits representing quantile functions $dG/dz$,

$d^2G/dz^2$, where z is a latent variable. This can be done using automatic differentiation techniques for quantum circuits, where for near-term devices and specific gates we can use the parameter shift rule. The differentiation of quantum feature maps follows the DQC strategy, where $dG/dz$ may be estimated as a sum of expectation values

$$\frac{dG(z)}{dz} = \frac{1}{2} \sum_{j=1}^{N} \varphi'_j(z)\left(\langle G_j^+\rangle - \langle G_j^-\rangle\right) \qquad (14)$$

where $\langle G_j^+\rangle$ and $\langle G_j^-\rangle$ denote the evaluation of the circuit with the $j$-th gate parameter shifted positively and negatively by $\pi/2$. This generally requires $2N$ circuit evaluations. The (non-linear) function $\varphi_j(z)$ represents the z-dependent rotation phase for $j$-th qubit. A popular choice is $\varphi_j(z) = arcsin(z)$ (same for all qubits) referred as a product feature map, and other choices include tower feature maps. Quantum circuit differentiation for higher-order derivatives was recently considered in several studies. Extending the feature map differentiation to the second order, a parameter shift rule alongside the product rule may be used, and $d^2G/dz^2$ may be calculated as

$$\frac{d^2G(z)}{dz^2} = \frac{1}{2} \sum_{j=1}^{N} \varphi''_j(z)\left(\langle G_j^+\rangle - \langle G_j^-\rangle\right) \qquad (15)$$

$$+ \frac{1}{4} \sum_{j=1}^{N} \sum_{k=1}^{N} \varphi'_j(z)\varphi'_k(z)\left(\langle G_{jk}^{++}\rangle - \langle G_{jk}^{+-}\rangle - \langle G_{jk}^{-+}\rangle + \langle G_{jk}^{--}\rangle\right),$$

where $\langle G_{jk}^{++}\rangle$ and $\langle G_{jk}^{--}\rangle$ denotes the evaluation of the circuit with the rotation angles on qubits j and $k$ are shifted positively (negatively) by $\pi/2$. Similarly, $\langle G_{jk}^{+-}\rangle$ and $\langle G_{jk}^{-+}\rangle$ are defined for shifts in opposite directions. If implemented naively, the derivative in Eq. (15) requires $2N + 4N^2$ evaluations of circuit expectation values. This can be reduced by making use of symmetries in the shifted expectation values and reusing/caching previously calculated values, i.e. those for the function and its first-order derivative. Note that the first term in equation (15) is also computed when $G(z)$ is computed; similarly, shifting forward and back again on the same parameter equates to doing no shift, so that value can be reused as well. There is also symmetry in the labeling of j and k. All in all, reduced number of *additional* circuit evaluations required for the calculation of the second derivative is $2N^2$.

Boundary handling for PDEs

As differential equations with more than one independent variable are considered, a strategy for implementing (handling) the boundary in this situation needs to be developed. Consider a function of n variables and an initial condition of $f(t = 0, z) = u_0(z)$, where z is a vector of $n - 1$ independent variables, wherein the first variable usually corresponds to time. Here, several techniques may be extended, corresponding to pinned type and floating type boundary handling. When considering just one independent variable, a pinned boundary handling corresponds to encoding the function as

$f(t) = G(t)$. The boundary is then 'pinned' into place by use of a boundary term in the loss function $\mathcal{L}^B = [f(t_0) - u_0]^2$

. For multiple independent variables this generalizes to $f(t,z) = G(t,z)$ and $\mathcal{L}^B = \sum_i [f(t_0, z_i) - u(z_i)]^2$, where $\{z_i\}$ are the set of points along $t = 0$ at which the boundary is being pinned.

When using the floating boundary handling the boundary is implemented during the function encoding. In this case the function encoding is generalized from its single-variable representation, $f(t) = u_0 - G(0) + G(t)$, to the multivariate case as

$$f(t, z) = u_0(z) - G(0, z) + G(t, z). \qquad (16)$$

This approach does not require the circuit-embedded boundary, but instead needs derivatives of $u_0(z)$ for calculating the derivatives of $f$ with respect to any

$$z \in \mathcal{Z}.$$

Once the training is set up, the loss is minimized using a hybrid quantum-classical loop where optimal variational parameters $\theta_{opt}$ (and $\alpha_{opt}$) are searched using non-convex optimization methods.

Quantum quantile mechanics QQM-based generative modelling

Hereunder numerical simulations of generative modelling are presented. In a first part the developed quantum quantile mechanics approach for solving a specific SDE is aplied, and demonstrate a data-enabled operation. In a second part so-called quantum generative adversarial network (qGAN) is discussed that was previously used for continuous distributions, and show numerical results for solving the same problem. The two approaches are then compared.

To validate the QQM approach and perform time series forecasting, a prototypical test problem is selected. As an example, the Ornstein-Uhlenbeck (OU) process is chosen. In financial analysis its generalization is known as the Vasicek model. It describes the evolution of interest rates and bond prices. This stochastic investment model is the time-independent drift version of the Hull-White model widely used for derivatives pricing. It is noted that OU describes dynamics of currency exchange rates, and is commonly used in Forex pair trading - a primary example for quantum generative modelling explored to date. Thus, by benchmarking the generative power of QQM for OU we can compare it to other strategies (valid at fixed time point).

The Ornstein-Uhlenbeck process is described by an SDE with an instantaneous diffusion term and linear drift. For a single variable process $X_t$ the Ornstein-Uhlenbeck SDE reads

$$X_t = v(\mu - X_t)dt + \sigma dW_t, \qquad (5)$$

where the vector of underlying parameters $\xi = (v, \mu, \sigma)$ are the speed of reversion v, the long-term mean level $\mu$, and the degree of volatility $\sigma$. The corresponding Fokker-Planck equation for the probability density function $p(x, t)$ reads

$$\frac{\partial p(x,t)}{\partial t} = v \frac{\partial}{\partial x}(xp) + \frac{\sigma^2}{2} \frac{\partial^2 p}{\partial x^2}. \qquad (6)$$

when rewritten in the quantilized form, it becomes a PDE for the quantile mechanics,

$$\frac{\partial Q(z,t)}{\partial t} = v[\mu - Q(z,t)] + \frac{\sigma^2}{2} \left(\frac{\partial Q}{\partial z}\right)^{-2} \frac{\partial^2 Q}{\partial z^2}, \qquad (7)$$

which follows directly from the generic Eq. (2). In the following, we take the speed of reversion to be positive, $v > 0$ and adjust the long-term mean level to zero, $\mu = 0$.

Having established the basics, the differentiable quantum circuit may be trained to match the OU QF. First, for the starting point of time, the circuit to represent a quantile function based on available data may be trained (see the workflow charts in **Fig.** 4 and the discussion below). Next, having access to the quantum QF at the starting point, the evolution in time may be determined by solving the equation

$$\frac{\partial G(z,t)}{\partial t} = -vG(z,t) + \frac{\sigma^2}{2} \left(\frac{\partial G}{\partial z}\right)^{-2} \frac{\partial^2 G}{\partial z^2}, \qquad (8)$$

as required by QM [Eq. (7)]. This is the second training stage in the workflow chart shown in **Fig. 4.** To check the results, the analytically derived PDF may be used that is valid for the Dirac delta initial distribution $p(x, t_0) = \delta(x - x_0)$ peaked at $x_0$ that evolves as

$$p(x,t) = \sqrt{\frac{\nu}{\pi\sigma^2(1 - \exp[-2\nu(t - t_0)])}} \times \qquad (9)$$

$$\times \exp\left[-\frac{\nu(x - x_0 \exp[-\nu(t - t_0)])^2}{\sigma^2(1 - \exp[-2\nu(t - t_0)])}\right],$$

The Ornstein-Uhlenbeck QF evolution can then be rewritten as

$$Q(z,t) = x_0 \exp\left[-\nu(t - t_0)\right] + \qquad (10)$$

$$+ \sqrt{\frac{\sigma^2}{\nu}\left(1 - \exp\left[-2\nu(t - t_0)\right]\right)} \, \mathrm{inverf}(z),$$

where $inverf(x)$ denotes the inverse error function. This provides a convenient benchmark of a simple case application and allows assessing the solution quality. Additionally, a Euler-Maruyama integration may be used to compare results with the numerical sampling procedure with fixed number of shots.

To highlight the generative power of the QQM approach, the OU evolution $G(z, t)$ may be simulated starting from the known initial condition. This is set as $G(z, 0) = Q(z, 0)$ being the analytic solution [Eq. (10)] or can be supplied as a list of known samples associated to latent variable values. To observe a significant change in the statistics and challenge the training, the dimensionless SDE parameters may be selected as $v = 2.7$, $\sigma = 0.7$, $x_0 = 4$, and $t_0 = -0.2$ such that a narrow normal distribution with strongly shifted mean is evolved into a broad normal distribution at $\mu = 0$. Differentiable quantum circuits DQCs with $N = 6$ qubits and a single cost operator associated with a total Z magnetization $\hat{C} = \sum_{j=1}^{N} \hat{Z}_j$ may be used. For simplicity, the circuit may be trained using a uniformly discretized grid with Z containing 21 points from -1 to 1, and T containing 20 values from 0.0 to 0.5. To encode the function we use the product-type feature maps may be chosen as

$$\hat{U}_\phi(t) = \otimes_{j=1}^{N} \exp\left[-i \arcsin(t)\hat{Y}_j/2\right] \text{ and } \hat{U}_{\phi'}(z) = \otimes_{j=1}^{N} \exp\left[-i \arcsin(z)\hat{X}_j/2\right]$$

The variational circuit corresponds to HEA with the depth of six layers of generic single qubit rotations plus nearest-neighbor CNOTs. The floating boundary handling may be exploited, and a mean squared error (MSE) as the distance measure, $D(a, b) = (a - b)2$ may be selected. The system may be optimized for a fixed number of epochs using the Adam optimizer for gradient-based training of variational parameters $\theta$. This may be implemented with a full quantum state simulator in a noiseless setting.

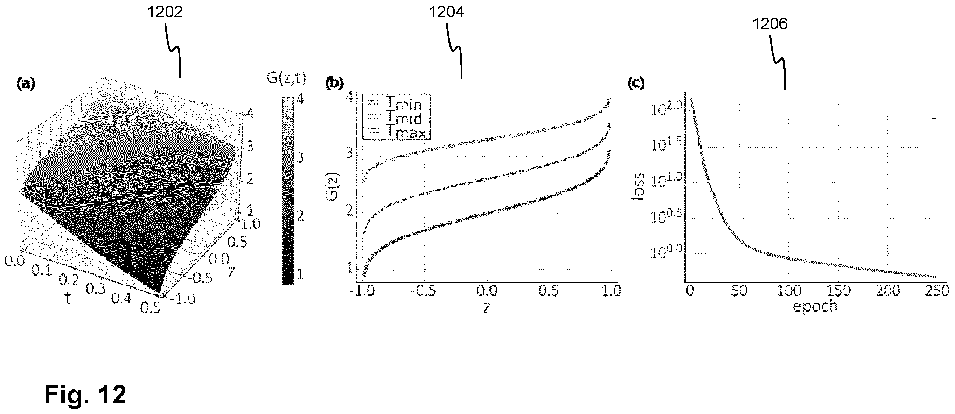

**Fig. 12** depicts figures of simulation results from applying the presented method to solving the Ohrnstein-Uhlenbeck process using QCL as a subroutine that is executed on a hybrid computer as described with reference to **Fig. 7**. In particular, the figures illustrate the training time evolution of Ornstein-Uhlenbeck process. The results are shown for runs with analytic initial condition and parameters chosen as $v = 1$, $\sigma = 0.7$, $x_0 = 4$. **Fig. 12 (a)** shows surface plot for the trained DQC-based quantile function $G(z, t)$ that changes in time. **Fig. 12 (b)** depicts slices of the quantum quantile function $G(z, t)$ shown at discrete time points $t = 0$ (labelled as $T_{min}$ hereafter), $t = 0.25$ ($T_{mid}$), and $t = 0.5$ ($T_{max}$). **Fig. 12 (c)** shows the loss as a function of epoch number showing the training progression and final loss for circuits shown in (a, b). The training loss as a function of epoch number shows a rapid convergence as the circuit is expressive enough to represent changes of initial QF at increasing time, and thus providing us with evolved $G(z, t)$.

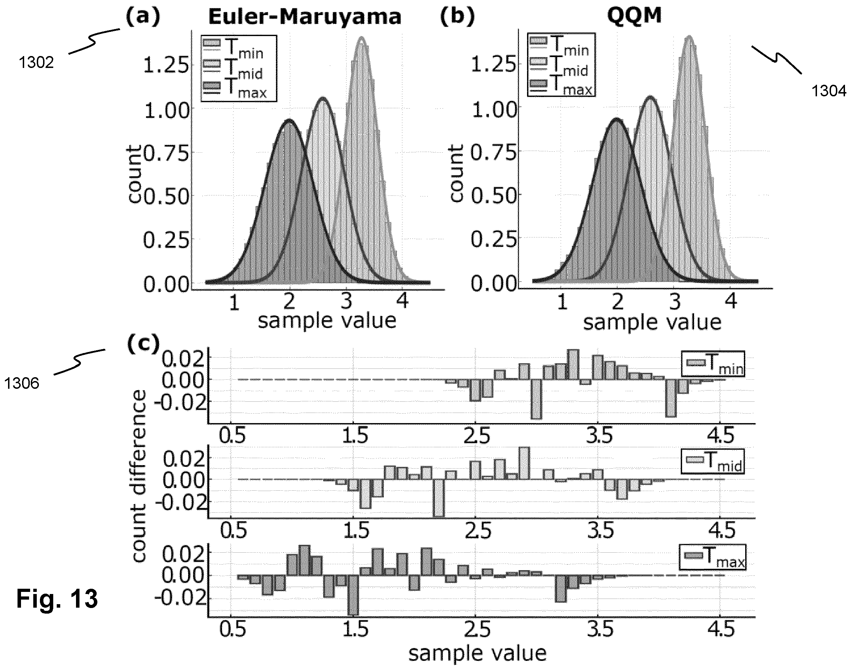

Next, sampling may be performed and the histograms coming from the Euler-Maruyama integration of Ornstein-Uhlenbeck SDE and the QQM training presented above may be compared. **Fig. 13** depicts figures of simulation results from applying the presented method to solving the Ohrnstein-Uhlenbeck process and comparing the results to a classical SDE solving method referred to as the Euler-Maruyma method. In particular, the figures include a comparison of histograms from the numerical SDE integration and QQM training.

The results are shown for the same parameters as **Fig. 12**. In **Fig. 13(a)** the three time slices of Euler-Maruyama trajectories are shown, built with $N_s = 100,000$ samples to see distributions in full. The counts are binned and normalized by $N_s$, and naturally show excellent correspondence with analytical results. The sampling from trained quantile may be performed by drawing random z ~ uniform(-1, 1) for the same number of samples. In **Fig. 13(b)** it is observed that QQM matches well the expected distributions. Importantly, the training correctly reproduces the widening of the distribution and the mean reversion, avoiding the mode collapse that hampers adversarial training. To further corroborate our findings, the difference between two histograms (Euler-Maruyama and QQM) is plotted in **Fig. 13(c),** and it is observed that the count difference remains low at different time points.

Next, the power of quantile function training from the available data (observations, measurements) corresponding to the Ornstein-Uhlenbeck process is demonstrated. Note that compared to the propagation of a known solution that is simplified by the boundary handling procedure, for this task both the surface $G(z, t)$ and the initial quantile function $G(z, T_{min})$ are learned. To learn the initial QF (same parameters as for **Figs. 12** and **13)** a quantum circuit learning QCL method may be used to train a quantum neural network based on the observations. The samples in the initial dataset are collected into bins and sorted in the ascending order as required by QF properties. From the original $N_s$ = 100,000 that are ordered an interpolated curve may be obtained. Target values for QCL training may be obtained by choosing $N_{points}$ = 43 points in Z between -1 and 1. It is noted that the training set is significantly reduced, and such data-frugal training holds as long as the QF structure is captured (monotonic increase). The training points are in the Chebyshev grid arrangement as $cos[(2n - 1)\pi/(2N_{points})]$ ($n$ = 1,2,...,$N_{points}$), this puts slight emphasis on training the distribution tails around $|z| \approx 1$. To make the feature map expressive enough that it captures full z-dependence for the trained initial QF, a tower-type product feature maps defined as $\hat{U}_{\phi'}(z) = \bigotimes_{j=1}^{N} \exp\left[-i \arcsin(z)\hat{X}_j/2\right]$ may be used where rotation angles depend on the qubit number j. For the training a six-qubit register may be used, and the same variational strategy may be used as described with reference to Fig. 10. A high-quality solution with a loss of $\sim 10^{-6}$ for $G(z_0)$ can be obtained at the number of epochs increased to few thousands, and pre-training with product states allows reducing this number to hundreds with identical quality.

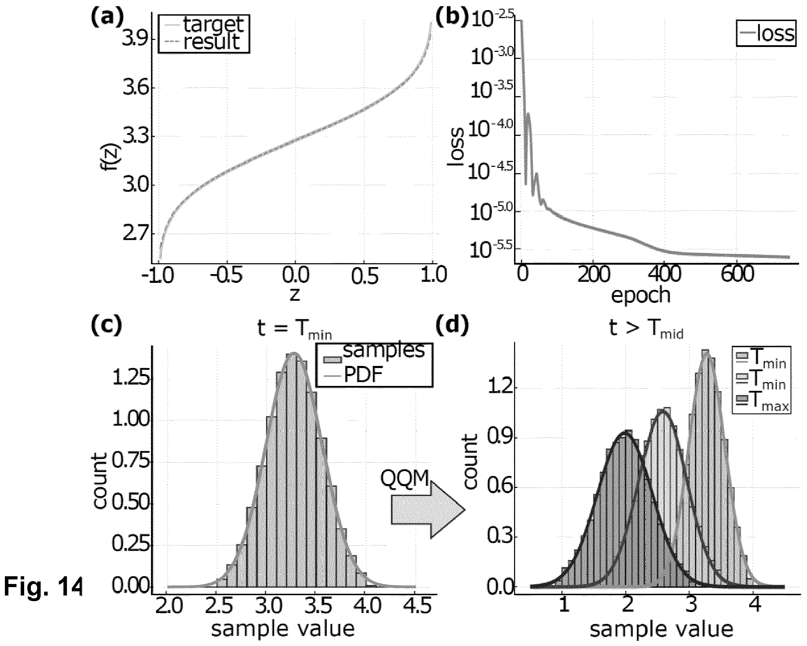

**Fig. 14** depicts learning the quantile function describing the stochastic distribution underlying the Ohrnstein-Uhlenbeck process. In particular, the figures illustrate a Quantile function trained based on initial data. **Fig. 14(a)** depicts a trained QF for the Ornstein-Uhlenbeck process at $t$ = 0 (dashed curve labeled as result), plotted together with the known true quantile (solid line labeled as target, results overlay). The parameters are the same as for **Fig. 12**. **Fig. 14(b)** depicts the training loss at different epochs, with the final epoch producing the QF in **Fig. 14(a)**. Further, **Fig. 14(c)** depicts normalized histogram of samples from the data-trained QF, plotted against the analytic distribution (PDF). $N_s$ = 100,000 random samples are drawn and bin counts are normalized by $N_s$ as before. **Fig. 14(d)** depicts histograms for the data-trained QF evolved with quantum quantile mechanics, shown at three points of time. The histograms confirm the high quality of sampling, and show that the approach is suitable for time series generation.

qGAN-based generative modelling

Generative adversarial networks represent one of the most successful strategies for generative modelling. It is used in various areas, ranging from engineering, pharmaceuticals to finance, where GANs are used to enrich financial datasets. The latter is especially relevant when working with relatively scarce or sensitive data. The structure of GAN is represented by two neural networks: a generator $G_{NN}$ and a discriminator $D_{NN}$. The generator takes a random variable $z \sim p_z(z)$ from a latent probability distribution $p_z(z)$. This is typically chosen as a uniform (or normal) distribution for $z \in$ (-1,1). Using a composition $g_L \circ...\circ g_2 \circ g_1(z)$ of (nonlinear) operations $\{g_i\}_{i=1}^{L}$ such that the generator prepares a fake sample $G_{NN}(z)$ from the generator's probability distribution $p_G$, $G_{NN}(z) \sim p_G(G_{NN}(z))$. The goal is to make samples $\{G_{NN}(z_s)\}_{s=1}^{N_s}$, as close to the $s$ = 1 training dataset as possible, in terms of their sample distributions. If true samples $x \sim p_{data}(x)$ are drawn from a (generally unknown) probability distribution $p_{data}(x)$, the goal is to match $p_G(G_{NN}(z)) \approx p_{data}(x)$. This is achieved by training the discriminator network $D_{NN}$ to distinguish true from fake samples, while improving the quality of generated samples $\{G_{NN}(z_s)\}_{s=1}^{N_s}$, optimizing a minimax loss

$$\min_{G_{NN}} \max_{D_{NN}} \mathcal{L}_{GAN} = \min_{G_{NN}} \max_{D_{NN}} \left\{ \mathbb{E}_{x \sim p_{data}(x)}\left[ \log D_{NN}(x) \right] \right. \quad (11)$$

$$\left. + \mathbb{E}_{z \sim p_z(z)}\left[ \log(1 - D_{NN}(G_{NN}(z))) \right] \right\},$$

where $D_{NN}$ and $G_{NN}$ are the trainable functions represented by the discriminator and generator, respectively. The first loss term in Eq. (11) represents the log-likelihood maximization that takes a *true* sample from the available dataset, and maximizes the probability for producing these samples by adjusting variational parameters. The second term trains $G_{NN}$ to minimize the chance of being caught by the discriminator. it is noted that that $G_{NN}(z)$ is a function that converts a random sample z ∼ uniform(-1, 1) into a sample from the trained GAN distribution - therefore representing a *quantile-like function.* This is the relation that is developed further using the qGAN training.

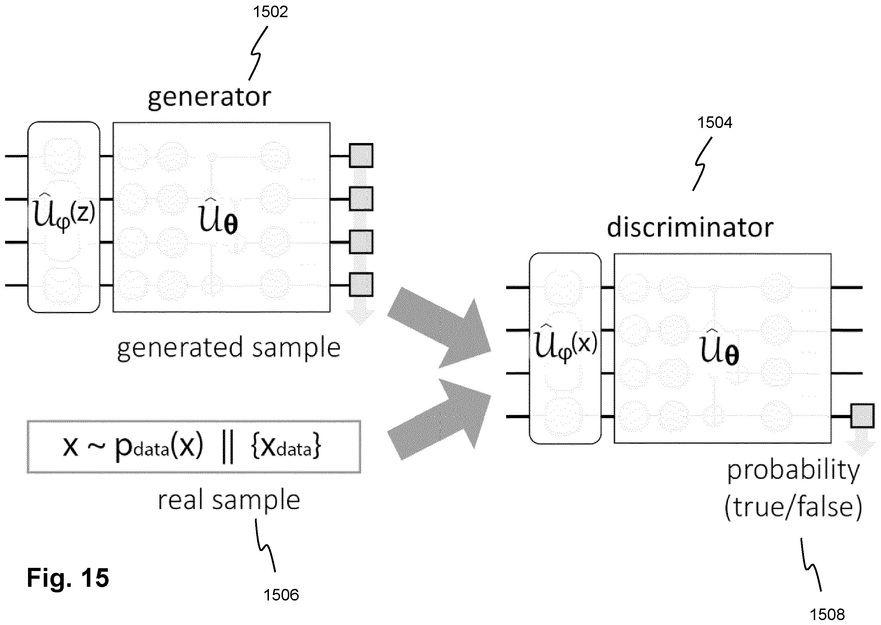

Quantum GANs follow the same scheme as their classical counterparts, but substitute the neural representation of the generator $G_{NN}$ and/or discriminator $D_{NN}$ by quantum neural networks. In the following, these are denoted as $G_Q$ and $D_Q$, respectively. The schedule of qGAN training and quantum circuits used for such training are presented in **Fig. 15**. In particular, the figures depict a typical Generative Adversarial Network (GAN) setup for learning to represent a distribution from input data. In particular, the figures illustrate a Quantum GAN workflow wherein quantum circuits are used both for generative modelling at $t = T_{min}$ (generator) and discrimination between real and fake samples (discriminator). The generator circuit $G_Q(z)$ is composed of the product feature map and hardware efficient ansatz HEA variational circuit. The discriminator $D_Q(x)$ is trained to distinguish samples from the initial data distribution.

To apply qGANs for the same task of OU process learning, a continuous qGAN that uses the feature map encoding may be used. The normal distribution may be modeled with zero mean and standard deviation of 0.2. Both the discriminator and generator use N = 6 registers with the expressive Chebyshev tower feature map followed by $d = 6$ HEA ansatz. The readout for the generator uses $\langle \hat{Z}_1 \rangle$ expectation, and the discriminator has the cost function such that we readout $(\langle \hat{Z}_1 \rangle + 1)/2 \in [0,1]$ modeling the probability. As before, Adam may be used and the qGAN may be trained for 2000 epochs using the loss function (11). Due to the mini-max nature of the training, the loss oscillates and instead of reaching (global) optimum qGAN tries to reach the Nash equilibrium. Unlike QQM training, one cannot simply use variational parameters for the final epoch, and instead test the quality throughout. To get the highest quality generator it is tested how close together are the discriminator ($L_D$) and generator ($L_G$) loss terms.

If they are within $\varepsilon = 0.1$ distance the Kolmogorov- Smirnov (KS) test may be performed and the distance between the currently generated samples and the training dataset may be checked. The result with minimal KS is chosen. It is stressed that KS is not used for training, and is exclusively for choosing the best result.

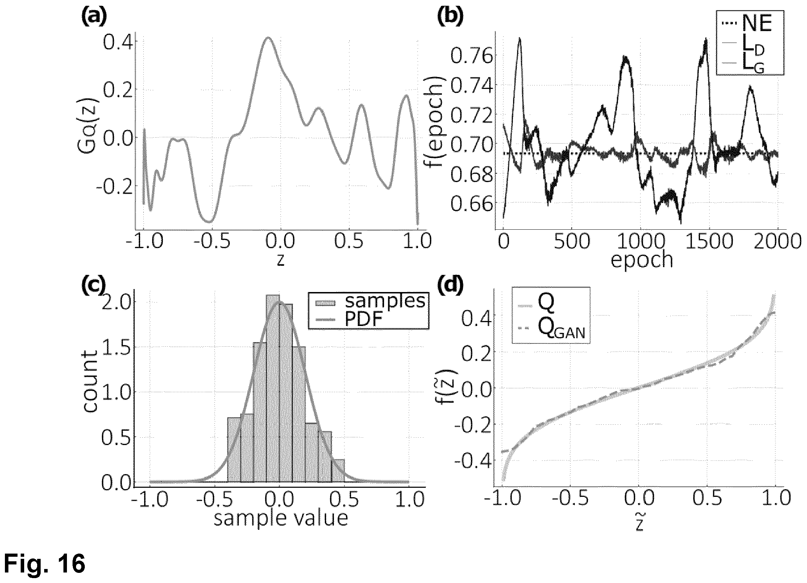

**Fig. 16** depicts a perspective of a GAN-trained generator, seen as a quantile function representation unit, showing the quantile function is reordered. In particular, the figures depict qGAN training and fixed-time sampling. **Fig 16(a)** illustrates a generator function that is shown for the optimal training angles. **Fig. 16(b)** depicts generator ($L_G$, red) and discriminator ($L_D$, blue) loss terms at different epochs. The Nash equilibrium at - ln(1/2) is shown by black dotted line (NE). **Fig. 16(c)** shows a normalized histogram for qGAN sampling ($N_s$ = 100,000), as compared to the target normal distribution ($\mu = 0$, $\sigma = 0.2$). (d) Ordered quantile $Q_{GAN}(\tilde{z})$ from the resulting qGAN generator shown in **Fig. 16(a)** (dashed curve), as compared to the true QF of the target distribution (solid curve). Naturally, the generator of qGAN $G_Q(z)$ does the same job as the trained quantile function $G(z)$ from previous subsections. We proceed to connect the two explicitly.

The main difference between the quantile function and the generator of qGAN is that the true QF is a strictly monotonically increasing function, while the qGAN generator GQ is not. We can connect them by noticing that qGAN works with the latent variable

$$z \in \mathcal{Z},$$

which we can rearrange into a QF by ordering the observations and assigning them the *ordered* latent variable

$$\tilde{z} \in \tilde{\mathcal{Z}}$$

(both functions produce the same sample distribution). It is convenient to define a mapping

$$h :: \tilde{\mathcal{Z}} \rightarrow$$

$$\mathcal{Z}$$

for $G_Q$ which rearranges it into increasing form, $Q_{GAN}(\tilde{z}) = G_Q(h(\tilde{z}))$. In practice, finding $h(\tilde{z})$ requires the evaluation of $G_Q(z)$

$$\forall z \in \mathcal{Z}$$

and re-assigning the samples to values of $\tilde{\mathcal{Z}}$ in ascending order. Importantly, both $h$ and its inverse

$$inv[h] : \mathcal{Z} \to \tilde{\mathcal{Z}}$$

can be defined in this process. In **Fig. 16(d)** we show the results of reordering for the generator function in **Fig. 16(a).** The reordered quantile $Q_{GAN}$ is plotted (dashed curve), approximately matching the target quantile (solid curve). We observe that the center of the quantile is relatively well approximated, but the tails are not (particularly for $\tilde{z} < 0$). This agrees with what is observed in the sampling shown in **Fig. 16(c)**. Having established the correspondence for qGAN-based generative modeling and quantile-based modeling we ask the question: can we apply differential equations to the quantile-like function to add differential constraints, and evolve the system in time enabling generative modelling?

The answer to the question above is far from trivial. To use a re-ordered qGAN quantile function for further training and time-series generation we need to account for the mapping when writing differential equations of quantile mechanics. Let us look into a specific case to develop an intuition on the behavior of re-ordered quantile functions with differential equations. A quantile function $Q(\tilde{z})$ of a normal distribution with mean $\mu$ and standard deviation $\sigma$ satisfies a quantile ODE.

$$\frac{d^2Q}{d\tilde{z}^2} - \frac{Q - \mu}{\sigma^2}\left(\frac{dQ}{d\tilde{z}}\right)^2 = 0, \qquad (12)$$

where we use the tilde notation $\tilde{z}$ to highlight that this is an ordered variable. Assuming perfect training such that $Q_{GAN}(\tilde{z})$ = $G_Q(h(\tilde{z}))$ closely matches $Q(\tilde{z})$, we substitute it into Eq. (12), and observe that the original qGAN generator obeys

$$\frac{d^2G_Q(z)}{dz^2} - \frac{G_Q(z) - \mu}{\sigma^2}\left(\frac{dG_Q(z)}{dz}\right)^2 = \frac{inv[h]''(z)}{inv[h]'(z)}\frac{dG_Q(z)}{dz}.$$

$$(13)$$

The left-hand side (LHS) of Eq. (13) has the same form as for the true QF [cf. Eq (12)], but the right-hand side (RHS) differs from zero and involves derivatives of the inverted mapping function $inv[h](z)$. This has important implications for training $GQ(z)$ with differential constraints, as the loss term includes the difference between LHS and RHS. Let us analyze the example of the quantile ODE in Eq. (13). In **Fig. 16(a)** we plot the LHS for $G_Q(z)$ coming from the qGAN training. The result is a smooth function, and we expect all relevant terms, including derivatives $dG_Q(z)/dz$, $d^2G_Q(z)/dz^2$, can be evaluated and trained at all points of the latent space. However, the problem arises when RHS enters the picture. The additional term strongly depends on the contributions coming from inverse map derivatives $inv[h]'$ and $inv[h]''$. At the same time we find that the map from a non-monotonic to a monotonically increasing function is based on a multivalued function. Furthermore the inverse of the map (along with the map itself) is continuous but not smooth - it becomes non-differentiable at some points due to $G_Q(z)$ oscillations.

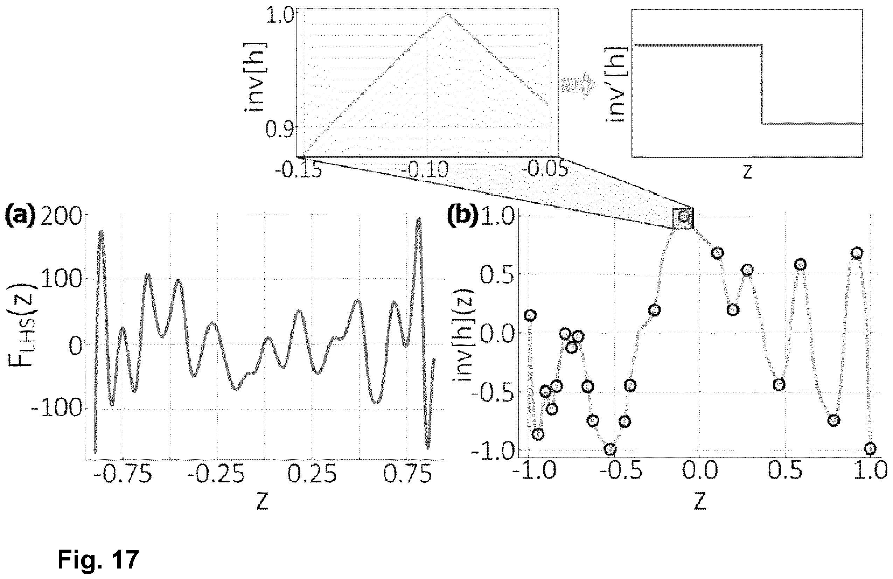

**Fig. 17** depicts discontinuities present in the derivatives of the inverted functions required for doing quantile mechanics with a GAN. In particular, the figures illustrate qGAN quantile function analysis. In **Fig. 17(a)** we plot the LHS of Eq. (13) for the trained qGAN generator $G_Q(z)$ shown in **Fig. 16(a).** The resulting function is oscillatory but smooth. **Fig. 17(b)** illustrates the inverse mapping function $inv[h]$ shown as a function of z. It transforms $G_Q(z)$ into the increasing quantile function $Q_{GAN}(\tilde{z})$ that is plotted in **Fig. 16(d)**. We highlight the non-differentiable points by blue circles, and zoom in on the characteristic behavior in the inset above. The derivative is not defined at the discontinuity (top right inset). The inset for **Fig. 17(b)** clearly shows the discontinuity. This translates to the absence of $inv[h]'(z)$ at a set of points, which unlike zero derivatives cannot be removed by reshuffling the terms in the loss function. The discovered unlikely property of the mapping puts in jeopardy the attempts to use differential-based learning for qGAN generators. While more studies are needed to estimate the severity of discontinuities (and if the set of such points can be excluded to yield stable training), the current results show that quantile functions in the canonical increasing form are more suitable for evolution and time series generation.

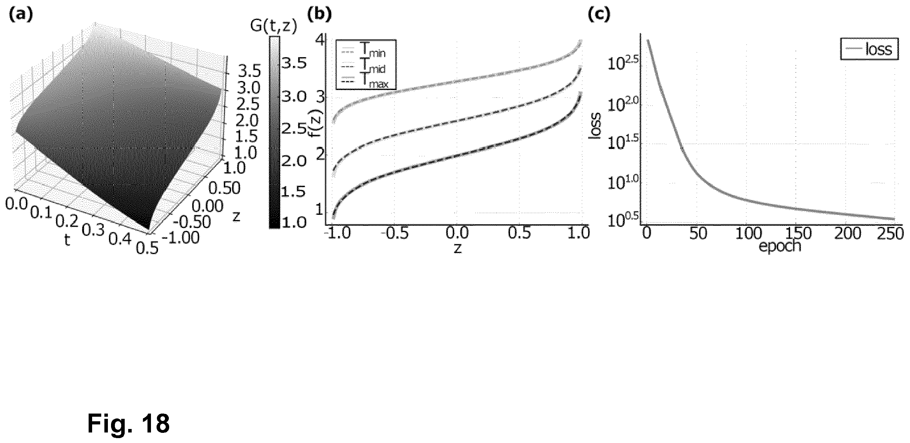

Above it is described in detail how the DQC or PINN approach may be used to time evolve an analytic initial condition and how to learn the initial condition based on observations. It is also possible to time evolve with DQC based on an observed initial quantile. The set-up of the DQC is the same as when an analytic initial condition leading to **Fig. 12**. The result of the training (starting from an observation dataset) is shown in **Fig. 18**, showing that the same quality of propagation is obtained. **The Fig. 18** shows a QQM time-evolution of Ornstein-Uhlenbeck process with data-inferred initial condition. The initial conditions are taken from **Fig. 14** and we use the same OU model parameters. **Fig. 18a** shows a surface plot for the quantile function evolved in time. **Fig. 18b** shows the trained quantile functions at three time points (being the same as in **Fig 12**). **Fig. 18c** shows loss as a function of epoch from training in **Fig. 18a** and **Fig. 18b.**

Interesting connections between thermodynamics, machine learning and image synthesis have been uncovered in recent years. Recently, Denoising Diffusion Probabilistic Models (DDPM) were shown to perform high quality image synthesis at state-of-the-art levels, sometimes better than other generative methods like GAN-approaches. Such discrete DDPMs can also be modelled as continuous processes using reverse-time SDEs when combined with ideas from score-based generative modeling. The reverse-time form of general stochastic differential equations may be given by the following expression (equation 17):

$$ d\boldsymbol{X}_t = \bar{f}(\boldsymbol{X}_t, t)dt + g(\boldsymbol{X}_t, t)dW_t, $$

where now a modified diffusion term $\bar{f}$ is given by (equation 18)

$$ \bar{f}(\mathbf{X}_t, t) = f(\mathbf{X}_t, t) - g^2(\mathbf{X}_t, t)\nabla_{\mathbf{X}} \log\left[p(\mathbf{X}, t)\right] $$

It was already proposed earlier, to solve such equations with general-purpose numerical methods such as Euler-Maruyama and stochastic Runge-Kutta methods, as well as using predictor-corrector samplers.

The reverse-time Fokker-Planck equation corresponding to may be solved based on its quantilized form, using the methods described in this application. The reverse-time form (not to be confused with backward-Kolmogorov) actually looks the same, but is simply solved backwards in time starting from a 'final condition' rather than an 'initial condition' data set.

DDPM can be regarded as the discrete form of a stochastic differential equation (SDE). Based on this assumption, the number of steps can be replaced by the interval of integration. Furthermore, the noise scales can be easily tuned by diffusion term in SDE. In the end, a conditional continuous energy based generative model combined with sequential modeling methods is established for forecasting tasks. The prediction can be achieved by iteratively sampling from the reverse continuous-time SDE. Any numerical solvers for SDEs can be used for sampling.

In Ref. Yan2021, a general framework based on continuous energy-based generative models for time series forecasting is established. The training process at each step is composed of a time series feature extraction module and a conditional SDE based score matching module. The prediction can be achieved by solving reverse time SDE. The method is shown to achieve state-of-the-art results for multivariate time series forecasting on real-world datasets. These works imply that the method described here can be used for (multivariate) time-series forecasting and high-quality image synthesis.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A method for solving a stochastic differential equation, SDE, using a hybrid data processing system comprising a classical computer and a special purpose processor, the method comprising:

   receiving by the classical computer a partial differential equation, PDE, the PDE describing dynamics of a quantile function QF associated a stochastic differential equation SDE, preferably the partial differential equation defining a quantilized Fokker-Planck QFP equation, the SDE defining a stochastic process as a function of time and one or more further variables and the QF defining a modelled distribution of the stochastic process;
   executing by the classical computer a first training process for training one or more neural networks to model an initial quantile function, the one or more neural networks being trained by the special purpose processor based on training data, the training data including measurements of the stochastic process;
   executing by the classical computer a second training process wherein the one or more neural networks that are trained by the first training process are further trained by the special purpose processor based on the QFP equation for one or more time intervals to model the time evolution of the initial quantile function; and,
   executing by the classical computer a sampling process based on the quantile functions for the one or more time intervals, the sampling process including generating samples of the stochastic process using the quantile function, the generated samples representing solutions of the SDE.

2. Method according to claim 1 wherein the special purpose processor is a quantum processor configured to execute operations associated with one or more quantum neural networks QNNs.

3. Method according to claims 2 wherein the second training process includes:

   receiving or determining, by the classical computer system, a formulation of quantum circuits representing the PDE describing the dynamics of a quantile function, preferably the quantum circuits being parameterized by at least one latent variable z associated with the SDE through its quantile functional description, and the quantum circuits including one or more function circuits for determining one or more trial functions values $f(z_j)$ around one more points $z_j$ and one or more differential function circuits for determining one or more trial derivative values, preferably one or more first order trail derivative and one or more second order trail derivatives, around the one or more points $z_j$.
   executing, by the quantum processor, the quantum circuits for a set of points $z_j$ in the variable space z of the PDE;
   receiving, by the classical computer system, in response to the execution of the quantum circuits quantum, hardware measurement data; and,
   determining, by the classical computer system, based on the quantum hardware measurement data and a loss function, if the quantum hardware measurement data forms a solution to the PDE.

4. Method according to claim 3 wherein the second training process includes solving the PDE based on differentiable quantum circuits DQCs, the differentiable quantum circuits including a first feature map quantum circuit which is a function of a differentiable variable x of the PDE, a second feature map quantum circuit which is a function of a differentiable variable $t$ of the PDE encoding the time evolution of the quantum circuit and a quantum circuit representing a variational ansatz.

5. Method according to claims 3 or 4 wherein the determining if the quantum hardware measurement data forms a solution to the one or more DEs is further based on one or more boundary conditions associated with the one or more DEs

6. Method according to any of claims 3-5 wherein executing the quantum circuits includes: translating each of the quantum circuits into a sequence of signals and using the sequence of signals to operate qubits of the quantum computer; and/or, wherein receiving hardware measurement data includes: applying a read-out signal to qubits of the quantum computer and in response to the read-out signal measuring quantum hardware measurement data.

7. Method according to any of claims 2-6 wherein the one or more quantum neural networks for modelling the quantile function includes gate-based qubit devices, optical qubit devices and/or gaussian boson sampling devices.

8. Method according to any of claims 2-7 wherein during the first training process the one or more neural networks are trained using a quantum generative adversarial network, qGAN, process, including a quantum generator neural network and a quantum discriminator neural network.

9. Method according to any of claims 2-8 wherein random numbers are generated by a classical computer which are fed into the one or more quantum neural networks that model the quantile functions for different time instances, for generate multiple sets of a samples wherein each set of samples has a distribution representing a solution to the SDE.

10. Method according to according to any of claims 2-9 wherein random numbers are generated by the quantum computer, preferably the random numbers being generated by the quantum neural network, the quantum GAN or QCBM setting.

11. Method according to claim 1 wherein the special purpose processor is a GPU, TPU or FPGA-based hardware processor configured to execute operations associated with one or more neural networks NNs.

12. Method according to claim 11 wherein during the first training process the one or more neural networks are trained using a generative adversarial network, GAN, process, including a generator neural network and a discriminator neural network.

13. Method according to claims 11 or 12 wherein the second training process includes solving the PDE based on one or more trained neural networks, preferably physics informed neural networks PINNs, the one or more trained neural networks being trained to model the quantile function and the derivative constraints on the quantile function as defined by the PDE for different time instances.

14. Method according to any of claims 12-13 wherein uniform random numbers are generated by a classical computer which are fed into the trained one or more neural networks that model quantile functions for different time instances, to generate multiple sets of a samples wherein each set of samples has a distribution representing a solution to the SDE.

15. Method according to any of claims 1-14 wherein the SDE defines a reverse-time SDE, or backward SDE, or forward SDE, or reverse-time backward SDE.

16. Method according to claim 1 wherein second order derivatives of the PDE are computed using the parameter-shift rule, as described by equation 15 in this application.

17. A system for solving one or more stochastic differential equations, SDEs, using a hybrid data processing system comprising a classical computer system and a special purpose processor, wherein the system is configured to perform the steps of:

receiving by the classical computer a partial differential equation, PDE, the PDE describing dynamics of a quantile function QF associated a stochastic differential equation SDE, preferably the partial differential equation defining a quantilized Fokker-Planck QFP equation, the SDE defining a stochastic process as a function of time and one or more further variables and the QF defining a modelled distribution of the stochastic process;
executing by the classical computer a first training process for training one or more neural networks to model an initial quantile function, the one or more neural networks being trained by the special purpose processor based on training data, the training data including measurements of the stochastic process;
executing by the classical computer a second training process wherein the one or more neural networks that are trained by the first training process are further trained by the special purpose processor based on the QFP equation for one or more time intervals to model the time evolution of the initial quantile function; and,
executing by the classical computer a sampling process based on the quantile functions for the one or more time intervals, the sampling process including generating samples of the stochastic process using the quantile function, the generated samples representing solutions of the SDE.

18. A system for solving one or more stochastic differential equations, SDEs, using a hybrid data processing system comprising a classical computer system and a special purpose processor, wherein the system is configured to perform any of the steps according to claims 1-16.

Fig. 1

Fig. 2

EP 4 131 075 A1

302

**SDE with drift f and diffusion g**

$$dX_t = f(X_t, t)dt + g(X_t, t)dW_t$$

$X_t \sim p(x, t)$ — 304        306

**Fokker-Planck equation for the PDF**

$$\frac{\partial p(x, t)}{\partial t} = -\frac{\partial}{\partial x}[f(x, t)p(x, t)] + \frac{1}{2}\frac{\partial^2}{\partial x^2}[g^2(x, t)p(x, t)]$$

312        $F_X(z, t) = \int_{-\infty}^{z} p(x, t)dx$        $Q(z, t) \equiv F_X^{-1}(z, t)$ — 308        310

**Fokker-Planck equation for the Quantile Function**

$$\frac{\partial Q(z, t)}{\partial t} = f(Q, t) - \frac{1}{2}\frac{\partial g^2(Q, t)}{\partial Q} + \frac{g^2(Q, t)}{2}\left(\frac{\partial Q}{\partial z}\right)^{-2}\frac{\partial^2 Q}{\partial z^2}$$

**Fig. 3**

EP 4 131 075 A1

```
┌─────────────────────────────────────────────────────────┐
│  Input Stochastic Differential Equation(s) paired with   │
│   initial/boundary conditions (which can be either       │
│         analytical or data-based)                        │
│  402                                                     │
└─────────────────────────────────────────────────────────┘
                            │
                            ▼
┌─────────────────────────────────────────────────────────┐
│  Set up DQC or PINN structures for representing          │
│          quantile function(s) G(z,t) and its derivatives │
│  404                                                     │
└─────────────────────────────────────────────────────────┘
                            │
                            ▼
┌─────────────────────────────────────────────────────────┐
│  Train Quantile Function at time t0 using initial        │
│  conditions, paired with the differential constraints    │
│  (solving quantile ODE), using DQC or PINN               │
│  406                                                     │
└─────────────────────────────────────────────────────────┘
                            │
                            ▼
┌─────────────────────────────────────────────────────────┐
│  Train time-dependent Quantile Function using Quantile   │
│  Mechanics; the DQC or PINN has an additional input      │
│  feature (time) to train against                         │
│  408                                                     │
└─────────────────────────────────────────────────────────┘
                            │
                            ▼
┌─────────────────────────────────────────────────────────┐
│  Generate samples from the optimized quantile function,  │
│      at different time points, to generate time-series   │
│  410                                                     │
└─────────────────────────────────────────────────────────┘
```

Fig. 4A

EP 4 131 075 A1

**420** ○ input SDEs (***f, g***) and initial/boundary conditions (*analytic* || ***data***)

**422** ○ set up ***DQCs*** for quantum ***quantile function*** $G_\theta(z,t)$ and derivatives

**424** ● train QF at $t_0$ using data and differetial constraints (quantile ODE)

$$d^2G_\theta(z)/dz^2 = F_{QODE}(z; t_0, f, g)$$

$$\theta_{opt} = \underset{\theta}{argmin}\ \mathcal{L}[G_\theta, F_{QODE}]$$

**426** ● train time-dependent quantum QF $G_\theta(z,t)$ with ***quantile mechanics***

$$\partial G_\theta(z,t)/\partial t = F_{QQM}(z, t; f, g)$$

$$\theta_{opt} = \underset{\theta}{argmin}\ \mathcal{L}[G_\theta, F_{QQM}]$$

427

$G_{\theta opt}(z,t)$

**428** ◆ perform sampling at different time points to generate ***time-series***

## Fig. 4B

Fig. 5

```
┌─────────────────────────────────────────────────────────────────┐
│                 Selecting a differential equation problem          │
│                    with specified boundary conditions             │
│      602         (Regularization points may be added)             │
└─────────────────────────────────────────────────────────────────┘
        │                                        │
        ▼                                        ▼
┌──────────────────────────────┐      ┌──────────────────────────────┐
│ Define a (nonlinear) feature  │      │ Design a classical Neural     │
│ map -> fixed schedule of      │      │ Network architecture of d     │
│ quantum gate operations       │      │ layers with width w           │
│ 604                           │      │ 610                           │
└──────────────────────────────┘      └──────────────────────────────┘
        │                                        │
        ▼                                        ▼
┌──────────────────────────────┐      ┌──────────────────────────────┐
│ Define a variational ansatz   │      │ Define a neural network       │
│ -> parameterized schedule of  │      │ connectivity/density          │
│ quantum gate operations       │      │                               │
│ 606                           │      │ 612                           │
└──────────────────────────────┘      └──────────────────────────────┘
        │                                        │
        ▼                                        ▼
┌──────────────────────────────┐      ┌──────────────────────────────┐
│ Define a cost function as     │      │ Choose (nonlinear)            │
│ weighted sum of quantum       │      │ activation functions          │
│ observables                   │      │                               │
│ 608                           │      │ 614                           │
└──────────────────────────────┘      └──────────────────────────────┘
        │                                        │
        ▼                                        ▼
┌─────────────────────────────────────────────────────────────────┐
│                       Design a loss function                      │
│                                                                    │
│      616                                                          │
└─────────────────────────────────────────────────────────────────┘
                              │
                              ▼
┌─────────────────────────────────────────────────────────────────┐
│         Select Boundary Handling method and derivatives           │
│                                                                    │
│      618                                                          │
└─────────────────────────────────────────────────────────────────┘
                              │
                              ▼
┌─────────────────────────────────────────────────────────────────┐
│                   Variationally optimize the model,               │
│          sample solution from final model configuration           │
│      620                                                          │
└─────────────────────────────────────────────────────────────────┘
```

Fig. 6

EP 4 131 075 A1

712

702

quantum processor

708

control and interface

710

Classical computer

differentiable quantum circuit generator

707

706

704

714

**Fig. 7**

802 _input_:
- ○ differential equations
  $$du_1/dx = \lambda_1 u_2 + \lambda_2 u_1$$
  $$du_2/dx = -\lambda_2 u_2 - \lambda_1 u_1$$
- ○ boundary conditions
  $$u_1(0) = u_{1,0}, \quad u_2(0) = u_{2,0}$$

804 _initialize_DQC_struct_:
- ○ choose feature map $\hat{U}_\varphi$
  - product map
  - Chebyshev map
  - Chebyshev tower map
  - evolution-enhanced map
- ○ choose varational ansatz $\hat{U}_\theta$
  - hardware efficient
  - alternating blocks
- ○ choose cost function
  - qubit magnetization
  - total magnetization
  - t-Ising Hamiltonian
  - many-body Hamiltonian
- ○ choose loss function
  - MSE
  - MAE
  - Kullback-Leibner
  - Jensen-Shannon
- ○ choose boundary handling
  - pinned
  - floating
  - optimized

806 _optimize_DQC_:
- ○ set grid $\mathbf{X} = \{x_i\}_{i=1}^{N_x}$
- ○ set exit condition
- ○ set regularization
- ○ set angles $\theta$
- ◇ for $n_j = 1{:}n_{iter}$ :
  - ◇ for $x_i$ in $\mathbf{X}$ :
    - ○ evaluate function circuits
    - ○ evaluate derivative circuits

808   $f(\mathbf{X})$   $df/dx|_{x \text{ in } X}$   810

- ○ evaluate loss function derivative

812 
- ◆ if NOT (exit condition):
  - ○ update angles $\theta$ using classical optimizer
- else: evaluate function and plot solution

**Fig. 8**

feature maps

variational quantum circuit

$\sum_{\ell} \alpha_{\ell} \langle \widehat{C}_{\ell} \rangle$

$\hat{U}_{\varphi}(t_i)$  $\hat{U}_{\varphi'}(z)$  $\hat{U}_{\theta}$

908

906

902  903  904

**Fig. 9A**

for $x_j$ in {X}:

912

$|0\rangle$  $\hat{U}^{+}_{\varphi,1}(x_j)$  $\hat{U}_{\theta}$

$|0\rangle$  $U^{-}_{\varphi,1}(x_j)$  $\hat{U}_{\theta}$

$|0\rangle$  $\hat{U}^{+}_{\varphi,2}(x_j)$  $\hat{U}_{\theta}$

$|0\rangle$  $\hat{U}^{-}_{\varphi,2}(x_j)$  $\hat{U}_{\theta}$

derivative quantum circuits

measure $df/dx|_{x=x_j}$

910

914

**Fig. 9B**

Fig. 10A

for $x_j$ in $X$: 1006

Quantum Feature Map Circuit $x_j$ 1007

Quantum Variational Ansatz Circuit $\vec{\theta}$ 1008

Measure $\langle C(x,\theta) \rangle$ $x \mapsto x_j$ 1010

Derivative Feature Map Circuits $x_j$ 1011

Quantum Variational Ansatz Circuit $\vec{\theta}$ 1008

Measure $d\langle C(x,\theta) \rangle / dx$ $x \mapsto x_j$ 1010

1009

1004

1016 $\vec{\theta} \to \vec{\theta'}$

Classical calculation of the loss function from $\langle C(x,\theta) \rangle$ and derivatives 1012

$\{\vec{\theta}, u(x,\vec{\theta})\}$

Optimization algorithm 1014

1006

1002

Fig. 10B

1018

1020

1021

1025

1022

1023

1024

$|0\rangle$ $|0\rangle$ $|0\rangle$ $|0\rangle$

Fig. 11a

**Fig. 11b**

EP 4 131 075 A1

Fig. 11c

Fig. 12

Fig. 13

EP 4 131 075 A1

Fig. 14

generator 1502

$\hat{U}_\varphi(z)$  $\hat{U}_\theta$

generated sample

$x \sim p_{data}(x) \parallel \{x_{data}\}$

real sample 1506

discriminator 1504

$\hat{U}_\varphi(x)$  $\hat{U}_\theta$

probability (true/false) 1508

Fig. 15

Fig. 16

**Fig. 17**

Fig. 18

Europäisches
Patentamt
European
Patent Office
Office européen
des brevets

# EUROPEAN SEARCH REPORT

**Application Number**

EP 21 19 0216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KYRIIENKO OLEKSANDR ET AL: "Solving nonlinear differential equations with differentiable quantum circuits", PHYSICAL REVIEW A, vol. 103, no. 5, 1 May 2021 (2021-05-01), page 52416, XP055882007, ISSN: 2469-9926, DOI: 10.1103/PhysRevA.103.052416 Retrieved from the Internet: URL:https://journals.aps.org/pra/pdf/10.11 03/PhysRevA.103.052416> | 1-10, 15-18 | INV. G06N3/04 G06F17/13 G06N3/08 G06N10/60 |
| A | * Abstract; Sections I, II, III.E, III.F, III.H, IV.D, V; figures 1-3 * | 11-14 | |
| X | LIU YANG ET AL: "Physics-Informed Generative Adversarial Networks for Stochastic Differential Equations", ARXIV.ORG, CORNELL UNIVERSITY LIBRARY, 201 OLIN LIBRARY CORNELL UNIVERSITY ITHACA, NY 14853, 5 November 2018 (2018-11-05), XP080934575, | 1,11-18 | |
| A | * Abstract; Sections 1, 2, 4.1, 5, 6; Algorithms 1 and 2 * | 2-10 | TECHNICAL FIELDS SEARCHED (IPC) G06N G06F |
| A | KUBO KENJI ET AL: "Variational quantum simulations of stochastic differential equations", PHYSICAL REVIEW A, vol. 103, no. 5, 1 May 2021 (2021-05-01), page 52425, XP055882065, ISSN: 2469-9926, DOI: 10.1103/PhysRevA.103.052425 Retrieved from the Internet: URL:https://journals.aps.org/pra/pdf/10.11 03/PhysRevA.103.052425> * abstract * | 1-18 | |

The present search report has been drawn up for all claims

| Place of search | Date of completion of the search | Examiner |
|---|---|---|
| The Hague | 21 January 2022 | Szymanski, Francois |

EPO FORM 1503 03.82 (P04C01)